# EUROPÄISCHE PATENTSCHRIFT

(11) **EP 4 308 268 B1**
(45) Veröffentlichungstag und Bekanntmachung des Hinweises auf die Patenterteilung: **09.09.2026**
(21) Anmeldenummer: 22712353.6
(22) Anmeldetag: 07.03.2022
(51) Int. Cl.: B01D 29/21, B01D 29/60, B01D 35/143, B01D 35/147, B01D 35/153, B01D 35/16, B01D 35/18, B01D 36/00

(54) **FILTEREINSATZ ZUM EINSETZEN IN EIN FILTERGEHÄUSE EINES FLUIDFILTERS**
FILTER CARTRIDGE FOR INSERTION IN A FILTER HOUSING OF A FLUID FILTER
CARTOUCHE FILTRANTE DESTINÉE À ÊTRE INSÉRÉE DANS UN BOÎTIER D'UN FILTRE À FLUIDE

(30) Priorität: 16.03.2021 DE 102021106331
(43) Veröffentlichungstag der Anmeldung: 24.01.2024
(73) Patentinhaber: Hengst SE, 48147 Münster (DE)
(72) Erfinder: VON LÜTZAU, Mark, 48157 Münster (DE); LEE, Marvin Michael, 48155 Münster (DE); NIEHOFF, Julian, 48653 Coesfeld (DE); BACHMANN, Jens, 48147 Münster (DE)
(74) Vertreter: Pelster Behrends Patentanwälte PartG mbB
(86) Internationale Anmeldenummer: PCT/EP2022/055768
(87) Internationale Veröffentlichungsnummer: WO 2022/194599

(56) Entgegenhaltungen:
- EP-A2- 1 844 838
- WO-A1-2005/098227
- WO-A1-2016/016085
- CN-A- 101 879 387
- DE-A1- 102004 046 580
- US-A1- 2017 340 996

## Beschreibung

Die Erfindung betrifft einen Filtereinsatz zum Einsetzen in ein Filtergehäuse eines Fluidfilters, mit einem Filtermaterial, welches dazu eingerichtet ist, im Betrieb des Fluidfilters von einer Rohseite zu einer Reinseite des Fluidfilters von einem zu filternden Fluid durchströmt zu werden, einem filtereinsatzseitiges Funkmodul, welches dazu eingerichtet ist, sich im Betrieb des Fluidfilters in Abhängigkeit des von dem Verschmutzungszustand des Filtermaterials abhängigen Druckunterschieds zwischen Rohseite und Reinseite des Fluidfilters zu bewegen und zur Erfassung des Verschmutzungszustands des Filtermaterials mit einem gehäuseseitigen Funkmodul des Fluidfilters, dessen Abstand zum filtereinsatzseitigen Funkmodul sich beim Bewegen des filtereinsatzseitigen Funkmoduls ändert, zu kommunizieren, und einem Umgehungsventil oder zumindest einem Teil eines Umgehungsventils, wobei das filtereinsatzseitige Funkmodul an dem Umgehungsventil oder dem filtereinsatzseitigen Teil des Umgehungsventils angeordnet oder in das Umgehungsventil oder das filtereinsatzseitige Teil des Umgehungsventils integriert ist, wobei das Umgehungsventil einen beweglichen Verschlusskörper aufweist oder das filtereinsatzseitige Teil des Umgehungsventils ein beweglicher Verschlusskörper ist, welcher dazu eingerichtet ist, sich in Abhängigkeit des Druckunterschieds zwischen Rohseite und Reinseite des Fluidfilters relativ zu einem einen Ventilsitz tragenden Kontaktkörper des Umgehungsventils zu bewegen, wobei das filtereinsatzseitige Funkmodul an dem Verschlusskörper des Umgehungsventils angeordnet und/oder dazu eingerichtet ist, sich gemeinsam mit dem Verschlusskörper des Umgehungsventils zu bewegen, wobei der Verschlusskörper dazu eingerichtet ist, eine Bypassleitung zwischen der Rohseite und der Reinseite zu sperren, bis der Druckunterschied zwischen Rohseite und Reinseite einen Differenzdruckgrenzwert erreicht und bei Erreichen des Differenzdruckgrenzwerts die Bypassleitung freizugeben, sodass zumindest ein Teil des zu filternden Fluids von der Rohseite auf die Reinseite gelangen kann, ohne das Filtermaterial zu durchströmen.

Ferner betrifft die Erfindung einen Fluidfilter zum Filtern eines Fluids. Der Fluidfilter umfasst ein Filtergehäuse mit einem gehäuseseitigen Funkmodul und einen Filtereinsatz mit einem filtereinsatzseitigen Funkmodul, wobei der Filtereinsatz dazu eingerichtet ist, in das Filtergehäuse eingesetzt zu werden und wobei das filtereinsatzseitige Funkmodul und das gehäuseseitige Funkmodul dazu eingerichtet sind, miteinander zu kommunizieren.

Darüber hinaus betrifft die Erfindung ein Filtersystem mit einem Fluidfilter und einer elektronischen Datenverarbeitungseinrichtung.

Während des Betriebs eines Fluidfilters setzt sich das Filtermaterial des Fluidfilters aufgrund der Fluidfilterung mit Partikeln zu, welche aus dem das Filtermaterial durchströmenden Fluids herausgefiltert werden. Die daraus resultierende zunehmende Verschmutzung des Filtermaterials führt zu einer ansteigenden Druckdifferenz zwischen Rohseite und Reinseite des Fluidfilters. Einige Fluidfiltertypen sind mit einem Umgehungsventil ausgestattet, welches bei Überschreitung eines Differenzdruckgrenzwerts zwischen Rohseite und Reinseite öffnet, um trotz eines stark verschmutzten Filtermaterials eine erforderliche Fluidströmung durch den Fluidfilter zu gewährleisten. Durch das Öffnen des Umgehungsventils wird die Fluidfilterung umgangen, sodass zumindest eine Teilmenge des Fluids den Fluidfilter ungefiltert durchströmen kann.

In der Praxis sollen Filtereinsätze frühzeitig vor dem Erreichen eines kritischen Verschmutzungszustands ersetzt werden. Zur Detektion des Verschmutzungszustands des Filtermaterials kann beispielsweise der Öffnungszustand des Umgehungsventils überwacht werden. Die Druckschrift US 2017/0340996 A1 schlägt in diesem Zusammenhang vor, den Öffnungszustand des Umgehungsventils mittels eines Hall-Sensors zu überwachen.

Weiterhin ist aus der Druckschrift DE 10 2004 046580 A1 ein Kraftstofffilter eines Verbrennungsmotors mit Reservefiltereinsatz bekannt.

Aus den Druckschriften WO 2016/016085 A1 und CN 101 879 387 A sind weitere Filterelemente bekannt.

In einer Vielzahl von Anwendungsfällen, in welchen Fluidfilter eingesetzt werden, beispielsweise in der Öl- oder Kraftstofffiltration von Kraftfahrzeugen oder in der Industriefiltration, besteht der Bedarf an intelligenten Fluidfiltern, welche dazu in der Lage sind, über den Verschmutzungszustand hinausgehende Informationen, welche beispielsweise eine Identifikation des eingesetzten Filtereinsatzes erlauben oder Betriebsparameter des Fluidfilters oder des Filtereinsatzes betreffen, bereitzustellen. Dies ist mit den zur Erfassung des Verschmutzungszustands des Filtermaterials eingesetzten Sensoren bisher nicht möglich.

Die der Erfindung zugrundeliegende Aufgabe besteht somit darin, eine intelligente Verschmutzungszustandserfassung in einem Fluidfilter zu ermöglichen, bei welcher über den Verschmutzungszustand hinausgehende Informationen für den Betrieb des Fluidfilters oder den Betrieb der Maschine, in welcher der Fluidfilter eingesetzt wird, bereitgestellt werden.

Die Aufgabe wird gelöst durch einen Filtereinsatz der eingangs genannten Art, wobei der Verschlusskörper dazu eingerichtet ist, sich mit zunehmendem Differenzdruck unterhalb des Differenzdruckgrenzwerts zu bewegen, ohne dass es zur Freigabe der Bypassleitung kommt.

Die Bewegung des Funkmoduls wird durch den Druckunterschied zwischen Rohseite und Reinseite des Fluidfilters veranlasst, sodass die Erfassung des Verschmutzungszustands über den veränderlichen Abstand zwischen dem gehäuseseitigen Funkmodul und dem filtereinsatzseitigen Funkmodul erfolgt. Insofern erlaubt das filtereinsatzseitige Funkmodul eine funkbasierte Erfassung des Verschmutzungszustands. Darüber hinaus können durch das filtereinsatzseitige Funkmodul über den Verschmutzungszustand hinausgehende Informationen bereitgestellt werden, welche durch das gehäuseseitige Funkmodul abgerufen werden können. Beispielsweise erlaubt das filtereinsatzseitige Funkmodul durch das Senden einer einsatzspezifischen Kennung eine funkbasierte Identifikation des Filtereinsatzes. Das filtereinsatzseitige Funkmodul ist vorzugsweise dazu eingerichtet, sich im Betrieb des Fluidfilters in Abhängigkeit des Druckunterschieds zwischen Rohseite und Reinseite des Fluidfilters in Axialrichtung zu bewegen.

Die Kommunikation zwischen dem filtereinsatzseitigen Funkmodul und dem gehäuseseitigen Funkmodul kann kontinuierlich oder diskontinuierlich erfolgen. Die Kommunikation zwischen dem filtereinsatzseitigen Funkmodul und dem gehäuseseitigen Funkmodul kann in regelmäßigen oder in unregelmäßigen Zeitabständen erfolgen und/oder durch spezifische Ereignisse ausgelöst bzw. veranlasst werden. Somit erfolgt auch die Erfassung des Verschmutzungszustands in regelmäßigen oder in unregelmäßigen Zeitabständen und/oder ereignisabhängig.

Der Filtereinsatz kann auch mehrere filtereinsatzseitige Funkmodule aufweisen, welche dazu eingerichtet sind, sich im Betrieb des Fluidfilters zur Erfassung des Verschmutzungszustands des Filtermaterials in Abhängigkeit des Druckunterschieds zwischen der Rohseite und der Reinseite des Fluidfilters zu bewegen und mit einem gehäuseseitigen Funkmodul des Fluidfilters zu kommunizieren. Die mehreren filtereinsatzseitigen Funkmodule können Funkmodule des gleichen Typs oder Funkmodule unterschiedlicher Typen sein. Die Funkmodule können beispielsweise unterschiedliche Modulationsarten verwenden, sodass deren Funksignale unterscheidbar sind. Ferner können die Funksignale anhand einer gesendeten Kennung einem filtereinsatzseitigen Funkmodul zugeordnet werden. Die mehreren filtereinsatzseitigen Funkmodule können die gleiche Übertragungsfrequenz oder voneinander abweichende Übertragungsfrequenzen nutzen. Die Anzahl der mit dem gehäuseseitigen Funkmodul kommunizierenden filtereinsatzseitigen Funkmodule ist vorzugsweise von deren Axialposition und somit von deren Abstand zum gehäuseseitigen Funkmodul abhängig. Somit kann über die Anzahl der mit dem gehäuseseitigen Funkmodul kommunizierenden filtereinsatzseitigen Funkmodule der Abstand zwischen dem gehäuseseitigen Funkmodul und den filtereinsatzseitigen Funkmodulen ermittelt werden, woraus der Verschmutzungszustand des Filtermaterials abgeleitet werden kann. Die filtereinsatzseitigen Funkmodule können übereinander angeordnet sein. Bei einem geringen Abstand zum gehäuseseitigen Funkmodul kommuniziert eine größere Anzahl von filtereinsatzseitigen Funkmodulen mit dem gehäuseseitigen Funkmodul als bei einem größeren Abstand zum gehäuseseitigen Funkmodul.

Der Fluidfilter kann beispielsweise ein Flüssigkeitsfilter, insbesondere ein Ölfilter oder ein Kraftstofffilter, oder ein Luft- oder Gasfilter sein. Das Fluid kann demnach eine Flüssigkeit, insbesondere Öl oder Kraftstoff, oder Luft, ein Gas oder ein Gasgemisch sein.

Das Filtermaterial kann einen umlaufenden Filtermaterialkörper bilden. Das Filtermaterial kann mehrfach gefaltet und/oder als Faltenbalg ausgebildet sein.

In einer bevorzugten Ausführungsform des erfindungsgemäßen Filtereinsatzes ist das filtereinsatzseitige Funkmodul dazu eingerichtet, ein oder mehrere Funksignale auszusenden, mittels welchen der Abstand des filtereinsatzseitigen Funkmoduls zu dem gehäuseseitigen Funkmodul ermittelbar ist und/oder welche eine Identifikation des Filtereinsatzes oder eine Typerkennung des Filtereinsatzes erlauben. Beispielsweise ist das filtereinsatzseitige Funkmodul dazu eingerichtet, eine einmalig vergebene und/oder filtereinsatzspezifische Kennung auszusenden, sodass über eine Signalauswertung der sich in dem Filtergehäuse befindende Filtereinsatz identifiziert werden kann. Über das eine oder die mehreren Funksignale können auch filtereinsatzbezogene Betriebsinformationen, wie beispielsweise die Laufleistung oder die bisherige Betriebsdauer, an das gehäuseseitige Funkmodul übermittelt werden. Ferner können fluidbezogene Betriebsinformationen von dem filtereinsatzseitigen Funkmodul an das gehäuseseitige Funkmodul übermittelt werden, beispielsweise die aktuelle Temperatur des Fluids oder eine zurückliegende Temperaturentwicklung des Fluids. Diese filtereinsatzbezogenen und/oder fluidbezogenen Betriebsinformationen können von dem filtereinsatzseitigen Funkmodul während des Betriebs ermittelt und aufgezeichnet werden. Das filtereinsatzseitige Funkmodul kann folglich einen Speicher zum Speichern der filtereinsatzbezogenen und/oder fluidbezogenen Betriebsinformationen umfassen, welcher während des Betriebs mit den filtereinsatzbezogenen und/oder fluidbezogenen Betriebsinformationen beschrieben wird.

Erfindungsgemäß weist der Filtereinsatz ein Umgehungsventil oder zumindest einen Teil eines Umgehungsventils auf, wobei das filtereinsatzseitige Funkmodul an dem Umgehungsventil oder an dem filtereinsatzseitigen Teil des Umgehungsventils angeordnet oder in das Umgehungsventil oder das filtereinsatzseitige Teil des Umgehungsventils integriert ist. Das Umgehungsventil ist im Betrieb des Fluidfilters zwischen der Rohseite und der Reinseite des Fluidfilters angeordnet. Das Umgehungsventil weist zumindest ein Teil auf, welches sich im Betrieb des Fluidfilters in Abhängigkeit des von dem Verschmutzungszustand des Fluidfilters abhängigen Druckunterschieds zwischen Rohseite und Reinseite des Fluidfilters bewegt. Das filtereinsatzseitige Funkmodul kann also an diesem beweglichen Teil des Umgehungsventils angeordnet werden, um über die Position des filtereinsatzseitigen Funkmoduls und somit dem Abstand zu dem gehäuseseitigen Funkmodul den Verschmutzungszustand des Fluidfilters zu erfassen.

Erfindungsgemäß weist das Umgehungsventil einen beweglichen Verschlusskörper auf oder das filtereinsatzseitige Teil des Umgehungsventils ist ein beweglicher Verschlusskörper. Der bewegliche Verschlusskörper ist dazu eingerichtet, sich in Abhängigkeit des Druckunterschieds zwischen der Rohseite und der Reinseite des Fluidfilters relativ zu einem einen Ventilsitz tragenden Kontaktkörper des Umgehungsventils zu bewegen. Der Verschlusskörper ist das Teil des Umgehungsventils, welches die zu einer Öffnung des Umgehungsventils führende Bewegung ausführt. Das filtereinsatzseitige Funkmodul ist an dem Verschlusskörper des Umgehungsventils angeordnet und/oder dazu eingerichtet, sich gemeinsam mit dem Verschlusskörper des Umgehungsventils zu bewegen. Der Verschlusskörper ist vorzugsweise ein Absperrkolben. Der Verschlusskörper des Umgehungsventils ist vorzugsweise dazu eingerichtet, sich im Betrieb des Fluidfilters in Abhängigkeit des Druckunterschieds zwischen Rohseite und Reinseite des Fluidfilters in Axialrichtung zu bewegen. Der Verschlusskörper sorgt vorzugsweise für eine radiale Abdichtung. Der Verschlusskörper ist vorzugsweise dazu eingerichtet, eine Bypassleitung zwischen der Rohseite und der Reinseite zu sperren, bis der Druckunterschied zwischen Rohseite und Reinseite einen Differenzdruckgrenzwert erreicht. Bei Erreichen des Differenzdruckgrenzwerts gibt der Verschlusskörper dann die Bypassleitung frei, sodass zumindest ein Teil des zu filternden Fluids von der Rohseite auf die Reinseite gelangen kann, ohne das Filtermaterial zu durchströmen. Die Bypassleitung kann durch eine oder mehrere Durchtrittsöffnungen in einer um den Verschlusskörper umlaufenden Bewandung gebildet werden, welche durch eine Axialbewegung des Verschlusskörpers freigegeben werden. Unterhalb des Differenzdruckgrenzwerts bzw. vor Erreichen des Differenzdruckgrenzwerts bewegt sich der Verschlusskörper mit zunehmendem Differenzdruck, ohne dass es zur Freigabe der Bypassleitung kommt.

In einer weiteren bevorzugten Ausführungsform des erfindungsgemäßen Filtereinsatzes ist der Verschlusskörper in einer Führungshülse angeordnet, welche dazu eingerichtet ist, den Verschlusskörper während einer differenzdruckbedingten Bewegung zu führen. Die Führungshülse kann vom Filtermaterial umgeben sein. Ferner kann die Führungshülse axial beabstandet von dem Filtermaterial angeordnet sein, beispielsweise ober- oder unterhalb eines stirnseitigen Endbereichs des Filtermaterials. Ferner kann die Führungshülse integraler Bestandteil einer stirnseitig des Filtermaterials angeordneten Endscheibe sein.

In einer anderen bevorzugten Ausführungsform des erfindungsgemäßen Filtereinsatzes weist das Umgehungsventil einen beweglichen Kontaktkörper auf oder das filtereinsatzseitige Teil des Umgehungsventils ist ein beweglicher Kontaktkörper. Der bewegliche Kontaktkörper trägt einen Ventilsitz für einen Verschlusskörper des Umgehungsventils, wobei der Kontaktkörper dazu eingerichtet ist, sich in Abhängigkeit des Druckunterschieds zwischen Rohseite und Reinseite des Fluidfilters relativ zu dem Verschlusskörper zu bewegen, wobei das filtereinsatzseitige Funkmodul an dem Kontaktkörper des Umgehungsventils angeordnet und/oder dazu eingerichtet ist, sich gemeinsam mit dem Kontaktkörper des Umgehungsventils zu bewegen. Der den Ventilsitz tragende Kontaktkörper ist das Teil des Umgehungsventils, welches während der Öffnung des Umgehungsventils still steht bzw. keine Bewegung ausführt. Dadurch, dass das filtereinsatzseitige Funkmodul an dem Kontaktkörper des Umgehungsventils angeordnet ist, kann der Verschmutzungszustand des Filtermaterials über die Erfassung des Abstands zwischen dem filtereinsatzseitigen Funkmodul und dem gehäuseseitigen Funkmodul erfolgen. Der Kontaktkörper des Umgehungsventils ist vorzugsweise dazu eingerichtet, sich im Betrieb des Fluidfilters in Abhängigkeit des Druckunterschieds zwischen Rohseite und Reinseite des Fluidfilters in Axialrichtung zu bewegen. Durch eine Bewegung des Kontaktkörpers kann eine Bypassleitung zwischen der Rohseite und der Reinseite freigegeben werden, wobei die Freigabe bei Erreichen eines Differenzdruckgrenzwertes zwischen Rohseite und Reinseite erfolgt. Unterhalb des Differenzdruckgrenzwertes bzw. vor Erreichen des Differenzdruckgrenzwertes bewegt sich der Kontaktkörper mit zunehmenden Differenzdruck, ohne dass es zur Freigabe der Bypassleitung kommt.

Das filtereinsatzseitige Funkmodul kann ferner an einem Elastomerbalg des Filtereinsatzes befestigt sein, wobei der Elastomerbalg bei steigendem Differenzdruck zwischen der Rohseite und der Reinseite des Fluidfilters verformt wird und eine Axialbewegung des filtereinsatzseitigen Funkmoduls erlaubt.

In einer anderen bevorzugten Ausführungsform des erfindungsgemäßen Filtereinsatzes wird das Filtermaterial von einer Trägerstruktur getragen, welche dazu eingerichtet ist, sich gemeinsam mit dem Filtermaterial im Betrieb des Fluidfilters in Abhängigkeit des Druckunterschieds zwischen Rohseite und Reinseite des Fluidfilters zu bewegen, wobei das filtereinsatzseitige Funkmodul an der Trägerstruktur oder dem Filtermaterial angeordnet und/oder dazu eingerichtet ist, sich gemeinsam mit der Trägerstruktur und/oder dem Filtermaterial zu bewegen. Die Trägerstruktur kann eine obere und/oder eine untere Endscheibe aufweisen. Die obere Endscheibe ist vorzugsweise an der oberen Stirnseite des Filtermaterials angeordnet. Die untere Endscheibe ist vorzugsweise an der unteren Stirnseite des Filtermaterials angeordnet. Die Trägerstruktur kann einen die Endscheiben verbindenden Stützkörper aufweisen. Der Stützkörper kann eine Gitterstruktur aufweisen. Die Trägerstruktur kann einteilig oder mehrteilig sein. Die Trägerstruktur ist vorzugsweise dazu eingerichtet, sich im Betrieb des Fluidfilters gemeinsam mit dem Filtermaterial in Abhängigkeit des Druckunterschieds zwischen Rohseite und Reinseite des Fluidfilters in Axialrichtung zu bewegen. Das filtereinsatzseitige Funkmodul kann beispielsweise mittig an der Trägerstruktur, insbesondere mittig an einer Endscheibe oder mittig an der die Endscheiben miteinander verbindenden Trägerstruktur angeordnet sein.

Darüber hinaus ist ein erfindungsgemäßer Filtereinsatz vorteilhaft, bei welchem die Trägerstruktur eine Funkmodulhalterung aufweist, welche sich vorzugsweise von einer stirnseitig des Filtermaterials angeordneten Endscheibe der Trägerstruktur auf der dem Filtermaterial abgewandten Seite in Axialrichtung erstreckt, wobei das filtereinsatzseitige Funkmodul von der Funkmodulhalterung axial beabstandet zu der Endscheibe und/oder dem Filtermaterial gehalten wird. Über die Funkmodulhalterung ist es möglich, das filtereinsatzseitige Funkmodul in einem Nahbereich der Gehäusebewandung des Filtergehäuses anzuordnen, sodass das gehäuseseitige Funkmodul im Bereich der Gehäusebewandung angeordnet und befestigt werden kann.

In einer anderen bevorzugten Ausführungsform des erfindungsgemäßen Filtereinsatzes weist die Funkmodulhalterung eine Schwimmkammer auf, in welcher ein schwimmfähiges Funkmodul angeordnet ist. Die Schwimmkammer kann ein Schwimmkäfig sein. Vorzugsweise ist die Schwimmkammer dazu eingerichtet, in einen Wassersammelbereich hineinzuragen, in welchem sich im Betrieb des Fluidfilters Wasser, insbesondere aus dem zu filternden Fluid abgeschiedenes Wasser, ansammelt. Insofern kann das schwimmfähige Funkmodul zur Erfassung des Wasserstands in dem Wassersammelbereich des Fluidfilters genutzt werden. Eine Füllstandsänderung im Wassersammelbereich führt zu einer Bewegung des sich in der Schwimmkammer befindenden schwimmfähigen Funkmoduls. Somit kann über die Position des schwimmfähigen Funkmoduls auch der Wasserstand im Wassersammelbereich abgeleitet werden.

Das Filtermaterial ist vorzugsweise dazu eingerichtet ist, im Betrieb des Fluidfilters Wasser aus dem Fluid abzuscheiden. Das schwimmfähige Funkmodul ist vorzugsweise dazu eingerichtet, im Betrieb des Fluidfilters auf einer aus dem Fluid abgeschiedenen Wassermenge zu schwimmen.

In einer anderen bevorzugten Ausführungsform des erfindungsgemäßen Filtereinsatzes ist das schwimmfähige Funkmodul dazu eingerichtet, auf dem sich in dem Wassersammelbereich sammelnden Wasser zu schwimmen, wobei die Schwimmkammer vorzugsweise einen Auftriebsbereich für das schwimmfähige Funkmodul aufweist, welcher ein Aufsteigen des schwimmfähigen Funkmoduls bei steigendem Wasserstand in dem Wassersammelbereich des Fluidfilters erlaubt. Das schwimmfähige Funkmodul weist vorzugsweise eine geringere Dichte als Wasser und/oder eine Dichte von weniger als 997 kg/m³ auf. Das schwimmfähige Funkmodul kann dazu eingerichtet sein, im Betrieb des Fluidfilters in einer Grenzschicht zwischen dem zu filternden Fluid auf der Rohseite des Fluidfilters und der sich in dem Wassersammelbereich des Fluidfilters befindenden Wassermenge zu schwimmen. Das schwimmfähige Funkmodul kann eine höhere Dichte als Benzin und/oder Diesel und/oder eine Dichte von mehr als 748 kg/m³ oder mehr als 833 kg/m³ aufweisen. Benzin weist eine Dichte von 748 kg/m³ auf. Diesel weist eine Dichte von 833 kg/m³ auf.

Der Filtereinsatz kann auch mehrere schwimmfähige Funkmodule oder ein schwimmfähiges Funkmodul mit mehreren Funkeinheiten aufweisen, welche dazu eingerichtet sind, im Betrieb des Fluidfilters zur Erfassung des Wasserstandes in dem Wassersammelbereich des Fluidfilters auf der sich in dem Wassersammelbereich des Fluidfilters befindenden Wassermenge zu schwimmen und mit einem gehäuseseitigen Funkmodul des Fluidfilters zu kommunizieren. Die mehreren schwimmfähigen Funkmodule oder die mehreren Funkeinheiten des einen schwimmfähigen Funkmoduls können Funkmodule bzw. Funkeinheiten des gleichen Typs oder Funkmodule bzw. Funkeinheiten unterschiedlicher Typen sein. Die mehreren schwimmfähigen Funkmodule oder die mehreren Funkeinheiten des einen schwimmfähigen Funkmoduls können beispielsweise unterschiedliche Modulationsarten verwenden, sodass deren Funksignale unterscheidbar sind. Ferner können die Funksignale anhand einer gesendeten Kennung einem schwimmfähigen Funkmodul bzw. einer Funkeinheit des einen schwimmfähigen Funkmoduls zugeordnet werden. Die mehreren schwimmfähigen Funkmodule oder die mehreren Funkeinheiten des einen schwimmfähigen Funkmoduls können die gleiche Übertragungsfrequenz oder voneinander abweichende Übertragungsfrequenzen nutzen. Die Anzahl der mit dem gehäuseseitigen Funkmodul kommunizierenden schwimmfähigen Funkmodule bzw. die Anzahl der mit dem gehäuseseitigen Funkmodul kommunizierenden Funkeinheiten des einen schwimmfähigen Funkmoduls ist vorzugsweise von deren Axialposition und somit von deren Abstand zum gehäuseseitigen Funkmodul abhängig. Somit kann über die Anzahl der mit dem gehäuseseitigen Funkmodul kommunizierenden schwimmfähigen Funkmodule bzw. die Anzahl der mit dem gehäuseseitigen Funkmodul kommunizierenden Funkeinheiten des einen schwimmfähigen Funkmoduls der Abstand zwischen dem gehäuseseitigen Funkmodul und den schwimmfähigen Funkmodulen bzw. der Abstand zwischen dem gehäuseseitigen Funkmodul und den Funkeinheiten des einen schwimmfähigen Funkmoduls ermittelt werden, woraus der Wasserstand im Wassersammelbereich abgeleitet werden kann. Die mehreren schwimmfähigen Funkmodule oder die mehreren Funkeinheiten des einen schwimmfähigen Funkmoduls können übereinander angeordnet sein. Bei einem geringen Abstand zum gehäuseseitigen Funkmodul kommuniziert eine größere Anzahl von schwimmfähigen Funkmodulen bzw. eine größere Anzahl von Funkeinheiten des einen schwimmfähigen Funkmoduls mit dem gehäuseseitigen Funkmodul als bei einem größeren Abstand zum gehäuseseitigen Funkmodul.

In einer Weiterbildung des erfindungsgemäßen Filtereinsatzes ist das filtereinsatzseitige Funkmodul und/oder das schwimmfähige Funkmodul dazu eingerichtet, die für die Kommunikation mit dem gehäuseseitigen Funkmodul benötigte Energie aus einem von dem gehäuseseitigen Funkmodul erzeugten elektromagnetischen Feld zu beziehen. Das filtereinsatzseitige Funkmodul und/oder das schwimmfähige Funkmodul benötigen somit keine eigene Stromversorgung. Insofern kann auf eine Verkabelung des filtereinsatzseitigen Funkmoduls und/oder des schwimmfähigen Funkmoduls verzichtet werden. Dies sorgt für einen geringeren Verschleiß und eine erhöhte Ausfallsicherheit. Ferner entfallen Restriktionen bei der Anordnung des filtereinsatzseitigen Funkmoduls und des schwimmfähigen Funkmoduls.

In einer anderen bevorzugten Ausführungsform des erfindungsgemäßen Filtereinsatzes ist das filtereinsatzseitige Funkmodul und/oder das schwimmfähige Funkmodul ein Transponder, insbesondere ein RFID-Transponder, oder das filtereinsatzseitige Funkmodul und/oder das schwimmfähige Funkmodul umfassen jeweils einen Transponder, insbesondere einen RFID-Transponder. Das gehäuseseitige Funkmodul ist vorzugsweise ein RFID-Lesegerät oder umfasst ein RFID-Lesegerät.

Ferner kann das filtereinsatzseitige Funkmodul dazu eingerichtet sein, die elektrische Leitfähigkeit des Fluids im Nahbereich des filtereinsatzseitigen Funkmoduls zu erfassen bzw. zu messen. Die elektrische Leitfähigkeit von Fluiden, beispielsweise von Öl, nimmt im Laufe der Zeit bedingt durch Ruß- und Wassereintrag oder Metallabrieb zu, sodass über die Messung der elektrischen Leitfähigkeit die Fluidqualität bestimmt werden kann. Zur Messung der elektrischen Leitfähigkeit könnte das filtereinsatzseitige Funkmodul eine offene bzw. unterbrochene elektrische Leitung aufweisen, deren Zustand mittels einer elektronischen Überwachungseinrichtung überwacht wird. Über eine Stromfluss- und/oder Widerstandsmessung an der offenen Leitung kann die elektrische Leitfähigkeit des Fluids und somit die aktuelle Fluidqualität festgestellt werden. Diese Daten können in einem Kraftfahrzeug beispielsweise bei der Überwachung des Motorzustands herangezogen werden. Im Zusammenhang mit dem Einsatz eines solchen Systems bei der Ölfiltration für einen Verbrennungsmotor ergibt sich damit beispielsweise folgendes Szenario. Bei einer hohen Leitfähigkeit des Öls und regelmäßigen Kurzstrecken befindet sich üblicherweise eine große Menge von Wasser im Öl, sodass der Fahrer darüber informiert werden kann, dass zur Laufleistungsoptimierung zeitnah eine Langstrecke gefahren werden sollte. Ferner kann das Steuerungssystem des Kraftfahrzeugs das Serviceintervall anhand der gesammelten Daten anpassen. Bei einer hohen Leitfähigkeit des Öls in Kombination mit Langstrecken und entsprechenden Daten aus dem Bussystem des Fahrzeugs kann außerdem beispielsweise festgestellt werden, dass eine Undichtigkeit zwischen Kühlwasservorrat und Öl-Vorrat besteht. In diesem Fall kann der Fahrer des Kraftfahrzeugs darauf hingewiesen werden, dass ein Service oder eine Kontrolle erforderlich ist.

In einer weiteren bevorzugten Ausführungsform des erfindungsgemäßen Filtereinsatzes weist das filtereinsatzseitige Funkmodul und/oder das schwimmfähige Funkmodul eine Temperaturmesseinrichtung auf und ist dazu eingerichtet, Temperaturmesswerte an das gehäuseseitige Funkmodul zu übermitteln. Der Filtereinsatz kann beispielsweise ein Kraftstofffiltereinsatz sein. Das gehäuseseitige Funkmodul empfängt beispielsweise ein Temperatursignal vom filtereinsatzseitigen Funkmodul und/oder dem schwimmfähigen Funkmodul. Das filtereinsatzseitige Funkmodul und/oder das schwimmfähige Funkmodul kann einen zusätzlichen Mikrocontroller und einen oder mehrere Temperatursensoren umfassen, welche die Temperaturmesseinrichtung bilden. Die übermittelten Temperaturmesswerte können zum Steuern oder Regeln einer Heizeinrichtung, insbesondere einer Kraftstoffheizeinrichtung, verwendet werden. Wenn die Kraftstofftemperatur zu niedrig ist, wird die Kraftstoffheizeinrichtung eingeschaltet. Das gehäuseseitige Funkmodul kann die Kraftstoffheizeinrichtung regeln. Der eine oder die mehreren Temperatursensoren können jeweils einen temperaturabhängigen Widerstand aufweisen, beispielsweise einen Heißleiter (NTC-Widerstand) oder einen Kaltleiter (PTC-Widerstand). Für die Erfassung von Kraftstofftemperaturen ist der Erfassungsbereich derartiger Sensoren ausreichend, da lediglich vergleichsweise niedrige Temperaturen unter 80 ° C erfasst werden müssen. Ferner muss nicht permanent, sondern nur beim Motorstart und/oder in regelmäßigen oder unregelmäßigen Zeitintervallen gemessen werden.

Die der Erfindung zugrundeliegende Aufgabe wird ferner durch einen Fluidfilter der eingangs genannten Art gelöst, wobei der Filtereinsatz des erfindungsgemäßen Fluidfilters nach einer der vorstehend beschriebenen Ausführungsformen ausgebildet ist. Hinsichtlich der Vorteile und Modifikationen des erfindungsgemäßen Fluidfilters wird somit zunächst auf die Vorteile und Modifikationen des erfindungsgemäßen Filtereinsatzes verwiesen.

In einer bevorzugten Ausführungsform des erfindungsgemäßen Fluidfilters ist das gehäuseseitige Funkmodul dazu eingerichtet, ein oder mehrere Funksignale von dem filtereinsatzseitigen Funkmodul zu empfangen, mittels welchen der Abstand des filtereinsatzseitigen Funkmoduls zu dem gehäuseseitigen Funkmodul ermittelbar ist. Über den ermittelten Abstand des filtereinsatzseitigen Funkmoduls zu dem gehäuseseitigen Funkmodul kann dann über einen Zusammenhang zwischen Abstand und Verschmutzungszustand bzw. über ein entsprechendes Kennfeld der Verschmutzungszustand des Filtermaterials des Filtereinsatzes ermittelt werden.

Es ist außerdem ein Fluidfilter bevorzugt, bei welchem das Filtergehäuse einen Gehäusebasiskörper und einen Gehäusedeckel aufweist, wobei das gehäuseseitige Funkmodul in oder an dem Gehäusebasiskörper oder dem Gehäusedeckel angeordnet ist. Der Gehäusebasiskörper und der Gehäusedeckel sind vorzugsweise zerstörungsfrei lösbar miteinander verbindbar, beispielsweise über korrespondierende Gewindeabschnitte an dem Gehäusebasiskörper und dem Gehäusedeckel. Der Gehäusedeckel kann beispielsweise auf den Gehäusebasiskörper aufschraubbar sein. Der Gehäusedeckel kann beispielsweise eine Becherform aufweisen. Das Filtergehäuse des erfindungsgemäßen Fluidfilters kann ferner einen Stützdorn für den Filtereinsatz aufweisen, wobei das gehäuseseitige Funkmodul an oder in dem Stützdorn angeordnet ist.

In einer bevorzugten Ausführungsform weist der erfindungsgemäße Fluidfilter ein Wasserablassventil zum Ablassen des Wassers auf, welches sich in einem Wassersammelbereich des Fluidfilters ansammelt, wobei das Wasserablassventil dazu eingerichtet ist, in Abhängigkeit des Abstands zwischen dem schwimmfähigen Funkmodul und dem gehäuseseitigen Funkmodul betätigt zu werden. Der Fluidfilter kann in diesem Fall beispielsweise ein Kraftstofffilter sein. Das Wasserablassventil kann beispielsweise selbsttätig in Abhängigkeit des Wasserfüllstands in dem Wassersammelbereich geöffnet und/oder geschlossen werden. Beispielsweise kann das Wasserablassventil bei Erreichen oder Überschreiten eines Wasserfüllstandsgrenzwerts automatisch geöffnet werden, um das Wasser aus dem Wassersammelbereich bzw. aus dem Fluidfilter abzuführen. Der Wasserfüllstand kann, beispielsweise durch eine Datenverarbeitungseinrichtung eines Filtersystems, über den Abstand zwischen dem schwimmfähigen Funkmodul und dem gehäuseseitigen Funkmodul ermittelt werden. Das Wasserablassventil kann ein Magnetventil sein. Die Steuerung des Wasserablassventils in Abhängigkeit des Abstands zwischen dem schwimmfähigen Funkmodul und dem gehäuseseitigen Funkmodul erfolgt vorzugsweise über eine Steuerungseinrichtung, welche Bestandteil eines Filtersystems ist. Der Filtereinsatz des Fluidfilters kann zusätzlich zu dem schwimmfähigen Funkmodul ein filtereinsatzseitiges Funkmodul aufweisen, welches dazu eingerichtet ist, sich im Betrieb des Fluidfilters in Abhängigkeit des von dem Verschmutzungszustand des Filtermaterials abhängigen Druckunterschieds zwischen Rohseite und Reinseite des Fluidfilters zu bewegen. Ein derartiges filtereinsatzseitiges Funkmodul ist aber nicht zwingend erforderlich. Der Filtereinsatz des Fluidfilters kann auch ohne ein filtereinsatzseitiges Funkmodul zur Verschmutzungszustandserfassung aufzuweisen ein schwimmfähigen Funkmodul zur Steuerung des Wasserablasses umfassen.

Die der Erfindung zugrundeliegende Aufgabe wird ferner durch ein Filtersystem der eingangs genannten Art gelöst, wobei der Fluidfilter des erfindungsgemäßen Filtersystems nach einer der vorstehend beschriebenen Ausführungsformen ausgebildet ist. Die Datenverarbeitungseinrichtung ist vorzugsweise dazu eingerichtet, ein oder mehrere von dem filtereinsatzseitigen Funkmodul an das gehäuseseitige Funkmodul gesendete Signale und/oder deren Signaleigenschaften zum Ermitteln des Abstands zwischen dem filtereinsatzseitigen Funkmodul und dem gehäuseseitigen Funkmodul auszuwerten. Die Datenverarbeitungseinrichtung ermittelt zur Abstandserfassung vorzugsweise die Signalqualität der von dem gehäuseseitigen Funkmodul empfangenen Funksignale. Das gehäuseseitige Funkmodul oder die Datenverarbeitungseinrichtung kann hierzu eine Verstärkerschaltung zur Signalverstärkung und/oder eine Filterschaltung zur Signalfilterung aufweisen. Hinsichtlich der Vorteile und Modifikationen des erfindungsgemäßen Filtersystems wird zunächst auf die Vorteile und Modifikationen des erfindungsgemäßen Fluidfilters verwiesen.

In einer bevorzugten Ausführungsform des erfindungsgemäßen Filtersystems ist die elektronische Datenverarbeitungseinrichtung dazu eingerichtet, den Abstand zwischen dem filtereinsatzseitigen Funkmodul und dem gehäuseseitigen Funkmodul auf Grundlage der Signalstärke und/oder des Signalrauschens des einen oder der mehreren Signale zu ermitteln. Über die Signalstärke und das Signalrauschen der von dem filtereinsatzseitigen Funkmodul an das gehäuseseitige Funkmodul gesendeten Signale kann über eine entsprechende Signalauswertung der Abstand zwischen dem filtereinsatzseitigen Funkmodul und dem gehäuseseitigen Funkmodul vergleichsweise präzise berechnet werden. Auf Grundlage dieser Berechnung kann dann der Verschmutzungszustand des Filtermaterials ermittelt werden.

In einer anderen bevorzugten Ausführungsform des erfindungsgemäßen Filtersystems ist die elektronische Datenverarbeitungseinrichtung dazu eingerichtet, auf Grundlage des Abstands zwischen dem filtereinsatzseitigen Funkmodul und dem gehäuseseitigen Funkmodul den Verschmutzungszustand des Filtermaterials zu bestimmen. Zum Bestimmen des Verschmutzungszustands des Filtermaterials kann die elektronische Datenverarbeitungseinrichtung, einen, insbesondere filterspezifischen, filtereinsatzspezifischen oder filtermaterialspezifischen, Zusammenhang zwischen dem Abstand des filtereinsatzseitigen Funkmoduls von dem gehäuseseitigen Funkmodul und dem Verschmutzungszustand des Filtermaterials verwenden. Dieser Zusammenhang kann beispielsweise auch ein Kennfeld sein. Der Zusammenhang bzw. das Kennfeld kann auf einem Speicher der elektronischen Datenverarbeitungseinrichtung hinterlegt sein.

Nachfolgend werden bevorzugte Ausführungsformen unter Bezugnahme auf die beiliegenden Zeichnungen näher erläutert und beschrieben. Dabei zeigen:
- Fig. 1: ein Ausführungsbeispiel des erfindungsgemäßen Fluidfilters, bei welchem das Filtermaterial des Filtereinsatzes keine Verschmutzung aufweist, in einer schematischen Schnittdarstellung;
- Fig. 2: den in der Fig. 1 abgebildeten Fluidfilter, wobei das Filtermaterial des Filtereinsatzes eine geringfügige Verschmutzung aufweist, in einer schematischen Schnittdarstellung;
- Fig. 3: den in der Fig. 1 abgebildeten Fluidfilter, wobei das Filtermaterial des Filtereinsatzes eine starke Verschmutzung aufweist, in einer schematischen Schnittdarstellung;
- Fig. 4: eine Detaildarstellung des in der Fig. 1 abgebildeten Fluidfilters, in einer schematischen Schnittdarstellung;
- Fig. 5: einen Teilbereich eines weiteren nicht-erfindungsgemäßen Fluidfilters in einer perspektivischen Schnittdarstellung;
- Fig. 6: einen Teilbereich eines weiteren erfindungsgemäßen Fluidfilters in einer schematischen Schnittdarstellung;
- Fig. 7: einen Teilbereich eines weiteren erfindungsgemäßen Fluidfilters in einer perspektivischen Schnittdarstellung;
- Fig. 8: einen Teilbereich eines weiteren erfindungsgemäßen Fluidfilters in einer schematischen Schnittdarstellung;
- Fig. 9: einen Teilbereich eines erfindungsgemäßen Filtereinsatzes in einer perspektivischen Schnittdarstellung;
- Fig. 10: einen Teilbereich eines weiteren erfindungsgemäßen Fluidfilters in einer schematischen Schnittdarstellung;
- Fig. 11: einen nicht-erfindungsgemäßen Fluidfilter, bei welchem das Filtermaterial des Filtereinsatzes keine Verschmutzung aufweist, in einer schematischen Schnittdarstellung;
- Fig. 12: den in der Fig. 11 abgebildeten Fluidfilter, wobei das Filtermaterial des Filtereinsatzes eine starke Verschmutzung aufweist, in einer schematischen Schnittdarstellung;
- Fig. 13: den Wassersammelbereich eines nicht-erfindungsgemäßen Fluidfilters bei geringem Wasserstand;
- Fig. 14: den in der Fig. 13 abgebildeten Wassersammelbereich bei hohem Wasserstand;
- Fig. 15: einen nicht-erfindungsgemäßen Fluidfilter in einer schematischen Schnittdarstellung;
- Fig. 16: ein weiteres Ausführungsbeispiel des erfindungsgemäßen Fluidfilters, bei welchem das Filtermaterial des Filtereinsatzes keine Verschmutzung aufweist;
- Fig. 17: den in der Fig. 16 abgebildeten Fluidfilter, wobei das Filtermaterial des Filtereinsatzes eine geringfügige Verschmutzung aufweist;
- Fig. 18: den in der Fig. 16 abgebildeten Fluidfilter, wobei das Filtermaterial des Filtereinsatzes eine starke Verschmutzung aufweist; und
- Fig. 19: einen nicht-erfindungsgemäßen Filtereinsatz in einer schematischen Schnittdarstellung.

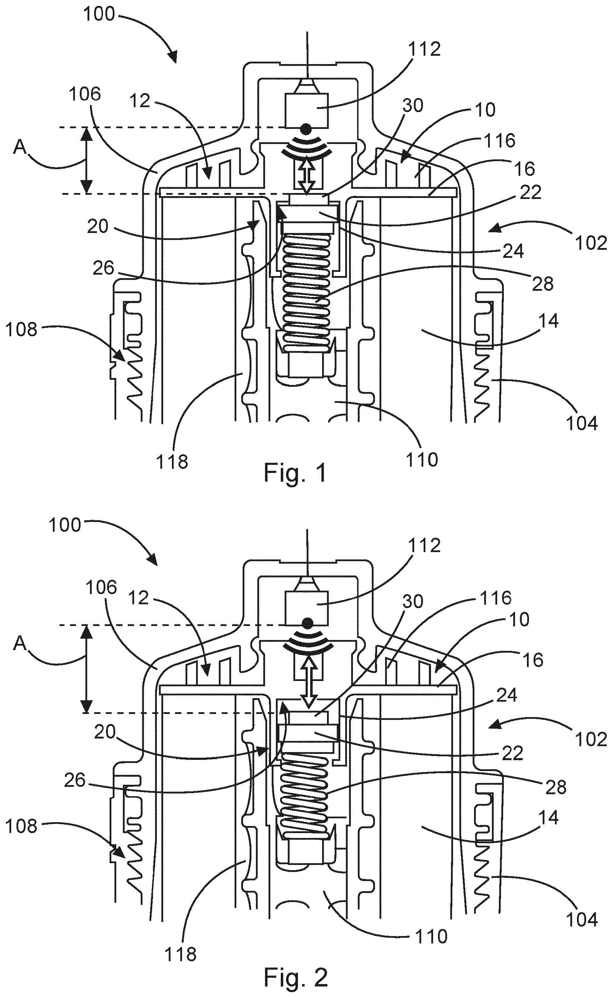

Die Fig. 1 zeigt einen als Ölfilter ausgebildeten Fluidfilter 100. Der Fluidfilter 100 umfasst ein mehrteiliges Filtergehäuse 102, wobei das Filtergehäuse 102 einen Gehäusebasiskörper 104 und einen Gehäusedeckel 106 aufweist. Der becherförmige Gehäusedeckel 106 und der Gehäusebasiskörper 104 sind über das Gewinde 108 miteinander verschraubt.

Ferner weist der Fluidfilter 100 einen Stützdorn 110 auf, auf welchen ein Filtereinsatz 10 aufgesetzt ist. Durch Abschrauben des Gehäusedeckels 106 ist der Filtereinsatz 10 aus dem Filtergehäuse 102 des Fluidfilters 100 entnehmbar.

Der Filtereinsatz 10 weist als Filtermaterial 14 einen umlaufenden Faltenbalg auf, wobei das Filtermaterial 14 im Betrieb des Fluidfilters 100 von einer Rohseite 116 zu einer Reinseite 118 des Fluidfilters 100 von dem zu filternden Fluid durchströmt wird. Das Filtermaterial 14 wird von einer Trägerstruktur 12 getragen. Die Trägerstruktur 12 umfasst eine Endscheibe 16, welche an einem stirnseitigen Ende des Filtermaterials 14 angeordnet ist.

Ferner umfasst der Fluidfilter 100 ein Umgehungsventil 20, über welches eine Bypassleitung zwischen der Rohseite 116 und der Reinseite 118 des Fluidfilters 100 freigegeben werden kann, damit auch bei einer starken Verschmutzung des Filtermaterials 14 eine ausreichende Fluidströmung durch den Fluidfilter 100 gewährleistet wird. Mit zunehmender Verschmutzung führt der Verschlusskörper 22 des Umgehungsventils 20 innerhalb einer Führungshülse eine Axialbewegung in Richtung der Feder 28 aus, wobei die Feder 28 der Axialbewegung des Verschlusskörpers 22 entgegenwirkt. Durch die Axialbewegung des Verschlusskörpers 22 vergrößert sich mit steigendem Differenzdruck zwischen der Rohseite 116 und der Reinseite 118 des Fluidfilters 100 der Abstand zwischen dem Ventilsitz 26 und dem Verschlusskörper 22. Der Ventilsitz 26 ist Bestandteil des Kontaktkörpers 24, welcher integraler Bestandteil der Endscheibe 16 ist. Mit zunehmender Verschmutzung des Filtermaterials 14 steigt der Differenzdruck zwischen Rohseite 116 und Reinseite 118 des Fluidfilters 100 an. Wenn dieser Differenzdruck einen Grenzwert überschreitet, wird die Bypassleitung durch das Umgehungsventil 20 freigegeben.

Der Filtereinsatz 10 umfasst ein filtereinsatzseitiges Funkmodul 30. Das filtereinsatzseitige Funkmodul 30 ist ein RFID-Transponder und ist an dem Verschlusskörper 22 des Umgehungsventils 20 angeordnet. An dem Filtergehäuse 102 ist ein gehäuseseitiges Funkmodul 112 angeordnet. Das gehäuseseitige Funkmodul 112 ist ein RFID-Lesegerät. Das filtereinsatzseitige Funkmodul 30 und das gehäuseseitige Funkmodul 112 sind dazu eingerichtet, miteinander zu kommunizieren. Aufgrund der Anordnung des filtereinsatzseitigen Funkmoduls 30 an dem Verschlusskörper 22 des Umgehungsventils 20 bewegt sich das filtereinsatzseitige Funkmodul 30 im Betrieb des Fluidfilters 100 in Abhängigkeit des von dem Verschmutzungszustand des Filtermaterials 14 abhängigen Druckunterschieds zwischen der Rohseite 116 und der Reinseite 118 des Fluidfilters 100. Mit sich änderndem Verschmutzungszustand des Filtermaterials 14 ändert sich also auch der Abstand A zwischen dem filtereinsatzseitigen Funkmodul 30 und dem gehäuseseitigen Funkmodul 112. Über den veränderlichen Abstand A zwischen dem gehäuseseitigen Funkmodul 112 und dem filtereinsatzseitigen Funkmodul 30 kann der Verschmutzungszustand des Filtermaterials 14 erfasst werden.

Zur Erfassung des Abstands A zwischen dem filtereinsatzseitigen Funkmodul 30 und dem gehäuseseitigen Funkmodul 112 kann das gehäuseseitigen Funkmodul 112 mit einer elektronischen Datenverarbeitungseinrichtung verbunden sein, welche die von dem filtereinsatzseitigen Funkmodul 30 an das gehäuseseitige Funkmodul 112 gesendeten Signale und/oder deren Signaleigenschaften zum Ermitteln des Abstands A zwischen dem filtereinsatzseitigen Funkmodul 30 und dem gehäuseseitigen Funkmodul 112 auswertet. Die elektronische Datenverarbeitungseinrichtung ist vorzugsweise dazu eingerichtet, die Signalstärke und/oder das Signalrauschen der von dem filtereinsatzseitigen Funkmodul 30 an das gehäuseseitige Funkmodul 112 gesendeten Signale auszuwerten und auf Grundlage dieser Auswertung den Abstand A zwischen den Funkmodulen 30, 112 zu ermitteln. Auf Grundlage des Abstands A zwischen den Funkmodulen 30, 112 kann die elektronische Datenverarbeitungseinrichtung dann den Verschmutzungszustand des Filtermaterials 14 bestimmen. Das Bestimmen des Verschmutzungszustands erfolgt dabei beispielsweise über einen filterspezifischen, filtereinsatzspezifischen oder filtermaterialspezifischen Zusammenhang zwischen dem Abstand A der Funkmodule 30, 112 und dem Verschmutzungszustand des Filtermaterials 14.

Das filtereinsatzseitige Funkmodul 30 ist dazu eingerichtet, die für die Kommunikation mit dem gehäuseseitigen Funkmodul 112 benötigte Energie aus einem von dem gehäuseseitigen Funkmodul 112 erzeugten elektromagnetischen Feld zu beziehen. Somit benötigt das filtereinsatzseitige Funkmodul 30 keine eigene Stromversorgung.

Das filtereinsatzseitige Funkmodul 30 ist dazu eingerichtet, Funksignale auszusenden, über welche neben dem Abstand A des filtereinsatzseitigen Funkmoduls 30 zu dem gehäuseseitigen Funkmodul 112 auch weitere filtereinsatzspezifische und fluidspezifische Kenngrößen ermittelbar sind. Beispielsweise kann das filtereinsatzseitige Funkmodul 30 eine filtereinsatzspezifische Kennung senden, über welche der aktuell verwendete Filtereinsatz 10 identifiziert werden kann. Das filtereinsatzseitige Funkmodul 30 kann während des Betriebs des Fluidfilters 100 filtereinsatzbezogene Betriebsinformationen und/oder fluidspezifische Betriebsinformationen erfassen und aufzeichnen, um diese an das gehäuseseitige Funkmodul 112 zu übermitteln.

Bei dem in der Fig. 1 dargestellten Zustand ist das Filtermaterial 14 des Filtereinsatzes 10 unverschmutzt, sodass ein vergleichsweise geringer Differenzdruck zwischen der Rohseite 116 und der Reinseite 118 des Fluidfilters 100 vorliegt. Der Differenzdruck ist derart gering, dass der radial abdichtende Verschlusskörper 22 des Umgehungsventils 20 noch an dem Ventilsitz 26 anliegt, gegen welchen der Verschlusskörper 22 von der Feder 28 gedrückt wird.

Bei dem in der Fig. 2 dargestellten Zustand hat bereits eine geringfügige Verschmutzung des Filtermaterials 14 stattgefunden. Der daraus resultierende erhöhte Differenzdruck zwischen der Rohseite 116 und der Reinseite 116 des Fluidfilters 100 hat dazu geführt, dass der Verschlusskörper 22 samt Funkmodul 30 gegen die Feder 28 nach unten gedrückt wird. Mit der Bewegung des Verschlusskörpers 22 geht eine Vergrößerung des Abstands A zwischen dem filtereinsatzseitigen Funkmodul 30 und dem gehäuseseitigen Funkmodul 112 einher. Diese Abstandsänderung kann durch eine Signalauswertung der von dem filtereinsatzseitigen Funkmodul 30 an das gehäuseseitige Funkmodul 112 übermittelten Funksignale erfasst werden.

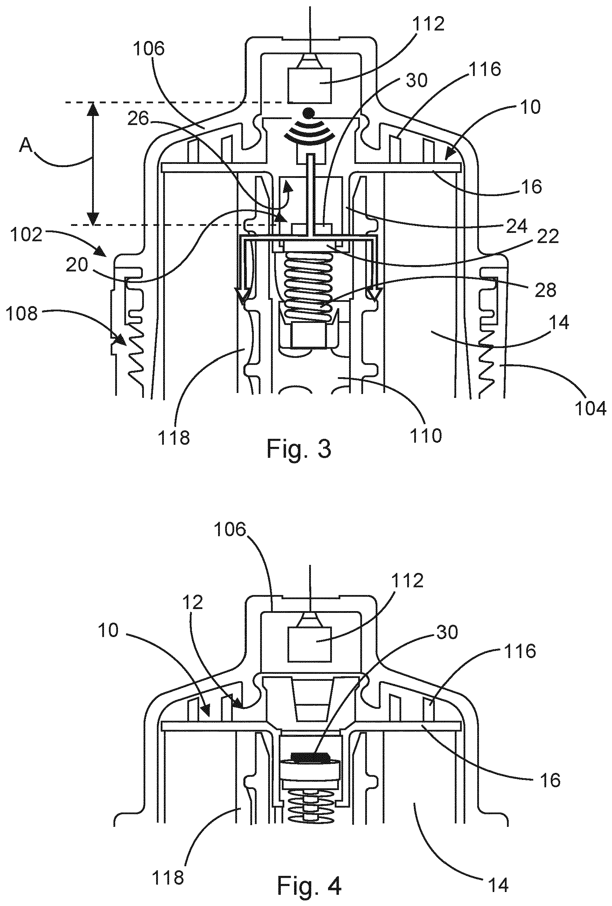

In der Fig. 3 ist ein Zustand dargestellt, bei welchem das Filtermaterial 14 des Filtereinsatzes 10 stark verschmutzt ist. Die Verschmutzung des Filtermaterials 14 hat zu einer weiteren Erhöhung des Differenzdrucks zwischen der Rohseite 116 und der Reinseite 118 des Fluidfilters 100 geführt, sodass der Verschlusskörper 22 des Umgehungsventils 20 sich weiter gegen die Feder 28 bewegt hat. Der Abstand A zwischen den Funkmodulen 30, 112 hat sich ebenfalls entsprechend vergrößert. Der Differenzdruck zwischen der Rohseite 116 und der Reinseite 118 des Fluidfilters 100 hat einen Differenzdruckgrenzwert überschritten, sodass eine Bypassleitung zwischen der Rohseite 116 und der Reinseite 118 freigegeben wurde. Die Bypassleitung wird durch mehrere Durchtrittsöffnungen in der den Verschlusskörper 22 umgebenden Bewandung gebildet. Sobald der Verschlusskörper 22 die Durchtrittsöffnungen passiert hat, kann zumindest ein Teil des Fluids ungefiltert von der Rohseite 116 auf die Reinseite 118 des Fluidfilters 100 gelangen. Die Strömung durch die freigegebenen Durchtrittsöffnungen ist in der Fig. 3 durch einen Strömungspfeil angedeutet. Idealerweise sollte der Filtereinsatz 10 vor dem Erreichen des in der Fig. 3 dargestellten Zustands ausgewechselt werden, sodass die Öffnung der Bypassleitung im Betrieb des Fluidfilters 100 vermieden wird.

Die Fig. 4 zeigt, dass an der oberen Endscheibe 16 der Trägerstruktur 12 Schnapphaken angeordnet sind, über welche der Filtereinsatz 10 in eine umlaufende Nut des Gehäusedeckels 106 eingeklipst ist. Die Schnapphaken und die den Verschlusskörper 22 führende Führungshülse sind integrale Bestandteile der Endscheibe 16.

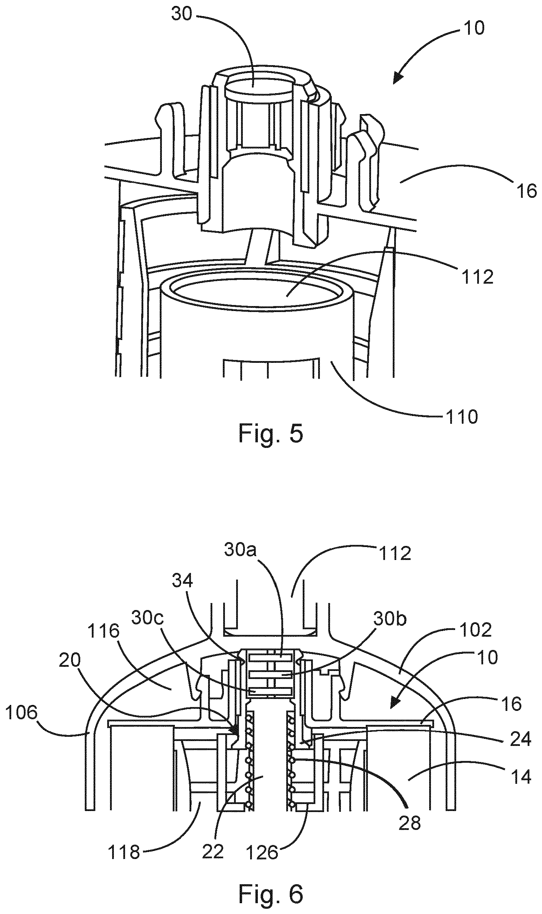

Die Fig. 5 zeigt eine alternative Anordnung des gehäuseseitigen Funkmoduls 112. Das gehäuseseitige Funkmodul 112 ist in diesem Fall an einem Stützdorn 110 des Filtergehäuses 102 angeordnet, wobei der Filtereinsatz 10 auf den Stützdorn 110 aufgesetzt ist.

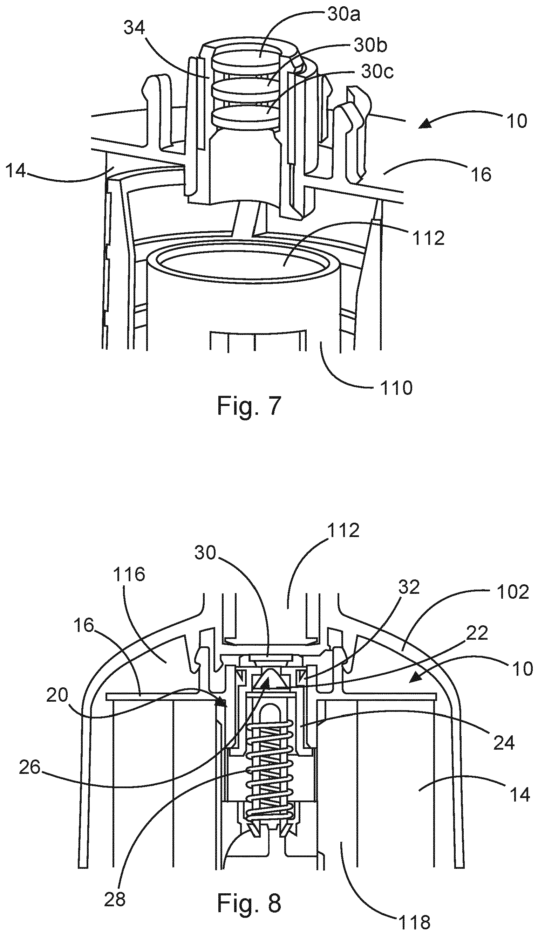

Die Fig. 6 und 7 zeigen Ausführungsbeispiele mit mehreren filtereinsatzseitigen Funkmodulen 30a-30c. Die filtereinsatzseitigen Funkmodule 30a-30c können sich im Betrieb des Fluidfilters 100 zur Erfassung des Verschmutzungszustands des Filtermaterials 14 in Abhängigkeit des Druckunterschieds zwischen Rohseite und Reinseite des Fluidfilters 100 bewegen und mit einem gehäuseseitigen Funkmodul 112 des Fluidfilters 100 kommunizieren. Die Anzahl der mit dem gehäuseseitigen Funkmodul 112 kommunizierenden filtereinsatzseitigen Funkmodule 30a-30c ist von deren Axialposition und somit von deren Abstand A zum gehäuseseitigen Funkmodul 112 abhängig. Somit kann über die Anzahl der mit dem gehäuseseitigen Funkmodul 112 kommunizierenden filtereinsatzseitigen Funkmodule 30a-30c der Abstand A zwischen dem gehäuseseitigen Funkmodul 112 und den filtereinsatzseitigen Funkmodulen 30a-30c ermittelt werden, woraus eine Datenverarbeitungseinrichtung dann den Verschmutzungszustand des Filtermaterials 14 berechnen kann. Die filtereinsatzseitigen Funkmodule 30a-30c sind übereinander angeordnet.

Bei der in der Fig. 6 dargestellten Ausführungsform ist das gehäuseseitige Funkmodul 112 an dem Gehäusedeckel 106 angeordnet. Wenn der Differenzdruck zwischen der Rohseite 116 und der Reinseite 118 des Fluidfilters 100 aufgrund einer zunehmenden Verschmutzung des Filtermaterials 14 ansteigt, wird eine Funkmodulhalterung 34, welche die filtereinsatzseitigen Funkmodule 30a-30c trägt, von dem gehäuseseitigen Funkmodul 112 weggedrückt, sodass sich der Abstand zwischen den filtereinsatzseitigen Funkmodulen 30a-30c und dem gehäuseseitigen Funkmodul 112 bei steigendem Differenzdruck zwischen der Rohseite 116 und der Reinseite 118 des Fluidfilters 100 vergrößert. In dem dargestellten Zustand wurde die Funkmodulhalterung 34 samt der Funkmodule 30a-30c noch nicht von dem gehäuseseitigen Funkmoduls 112 weggedrückt, da das Filtermaterial 14 nicht oder nur geringfügig verschmutzt ist. Die Funkmodulhalterung 34 bewegt sich gemeinsam mit dem den Ventilsitz tragenden Kontaktkörper 24. Bei einer Differenzdruckerhöhung zwischen der Rohseite 116 und der Reinseite 118 bewegen sich Kontaktkörper 24 und Verschlusskörper 22 des Umgehungsventils 20 zunächst gemeinsam in Axialrichtung von dem gehäuseseitigen Funkmodul 112 weg. Bei dieser Bewegung verlässt zunächst das filtereinsatzseitige Funkmodul 30c den Empfangsbereich des gehäuseseitigen Funkmoduls 112. Bei einer weiteren Differenzdruckerhöhung zwischen der Rohseite 116 und der Reinseite 118 des Fluidfilters 100 kommt es zu einer weiteren Axialbewegung von Kontaktkörper 24 und Verschlusskörper 22, wodurch das filtereinsatzseitige Funkmodul 30b und anschließend ggf. auch das filtereinsatzseitige Funkmodul 30a den Empfangsbereich des gehäuseseitigen Funkmoduls 112 verlässt. Über die Anzahl der mit dem gehäuseseitigen Funkmodul 112 kommunizierenden filtereinsatzseitigen Funkmodule 30a-30c kann eine Datenverarbeitungseinrichtung dann den Verschmutzungszustand des Filtermaterials 14 ermitteln.

Bevor das Umgehungsventil 20 öffnet, schlägt der den Ventilsitz tragende Kontaktkörper 24 an der Anschlagsfläche 126 an, sodass der Verschlusskörper 22 bei einer weiteren Differenzdruckerhöhung ohne den Kontaktkörper 24 in Axialrichtung weiter von dem gehäuseseitigen Funkmodul 112 wegbewegt wird. Durch die Relativbewegung von Verschlusskörper 22 und Kontaktkörper 24 wird das Umgehungsventil 20 dann geöffnet. Der Verschlusskörper 22 ist also das Teil des Umgehungsventils 20, welches die zu einer Öffnung des Umgehungsventils 20 führende Bewegung ausführt. Der den Ventilsitz tragende Kontaktkörper 24 ist das Teil des Umgehungsventils 20, welches während der Öffnung des Umgehungsventils 20 still steht bzw. keine Bewegung ausführt.

Die Fig. 7 zeigt ein Ausführungsbeispiel, bei welchem das gehäuseseitige Funkmodul 112 in einem Stützdorn 110 des Filtergehäuses 102 angeordnet ist.

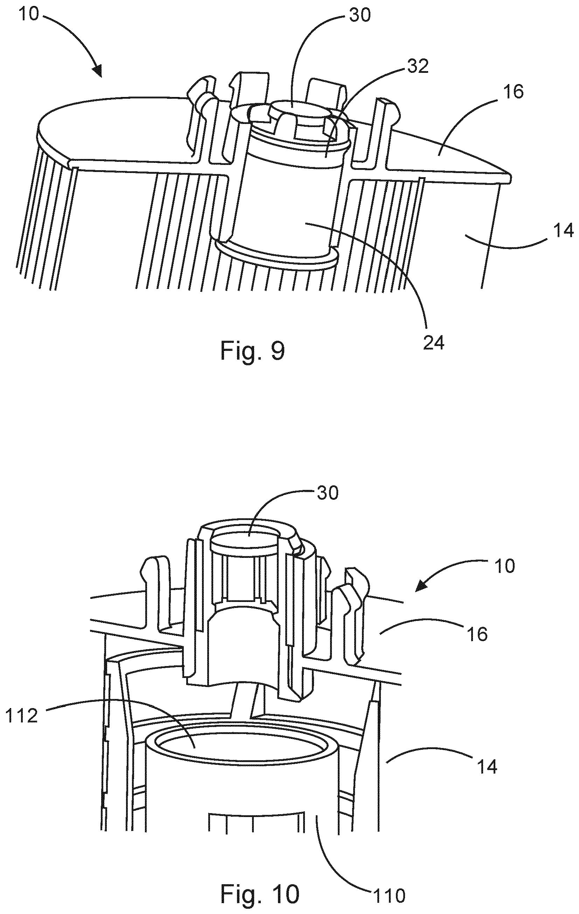

Die Fig. 8 und 9 zeigen einen Filtereinsatz 10, bei welchem das filtereinsatzseitige Funkmodul 30 nicht an den Verschlusskörper 22, sondern an dem den Ventilsitz 26 tragenden Kontaktkörper 24 des Umgehungsventils 20 angeordnet ist. Der Verschlusskörper 22 ist erneut das Teil des Umgehungsventils 20, welches die zu einer Öffnung des Umgehungsventils 20 führende Bewegung ausführt. Der den Ventilsitz tragende Kontaktkörper 24 ist wieder das Teil des Umgehungsventils 20, welches während der Öffnung des Umgehungsventils 20 still steht bzw. keine Bewegung ausführt. Bei der dargestellten Ausführungsform bewegen sich Verschlusskörper 22 und Kontaktkörper 24 bei einer Differenzdruckerhöhung zwischen der Rohseite 116 und der Reinseite 118 des Fluidfilters 100 vor dem Öffnen des Umgehungsventils 20 zunächst gemeinsam. Bei einer Differenzdruckerhöhung zwischen der Rohseite 116 und der Reinseite 118 des Fluidfilters 100 kommt es also auch zu einer Bewegung des den Ventilsitz 26 tragenden Kontaktkörpers 24. Durch die Axialbewegung des Kontaktkörpers 24 kommt es zu einer Abstandsänderung zwischen dem an dem Kontaktkörper 24 angeordneten filtereinsatzseitigen Funkmodul 30 und dem gehäuseseitigen Funkmodul 112. An dem Kontaktkörper 24 ist ferner eine umlaufende Dichtung 32 angeordnet, welche für eine radiale Abdichtung zwischen dem Kontaktkörper 24 und der den Kontaktkörper 24 führenden Hülse an der Endscheibe 16 sorgt.

Die Fig. 10 zeigt eine mit der in der Fig. 7 dargestellten Ausführungsform vergleichbare Variante, wobei der Filtereinsatz 10 nur ein Funkmodul 30 aufweist und das gehäuseseitige Funkmodul 112 an einem Stützdorn 110 des Filtergehäuses 102 angeordnet ist.

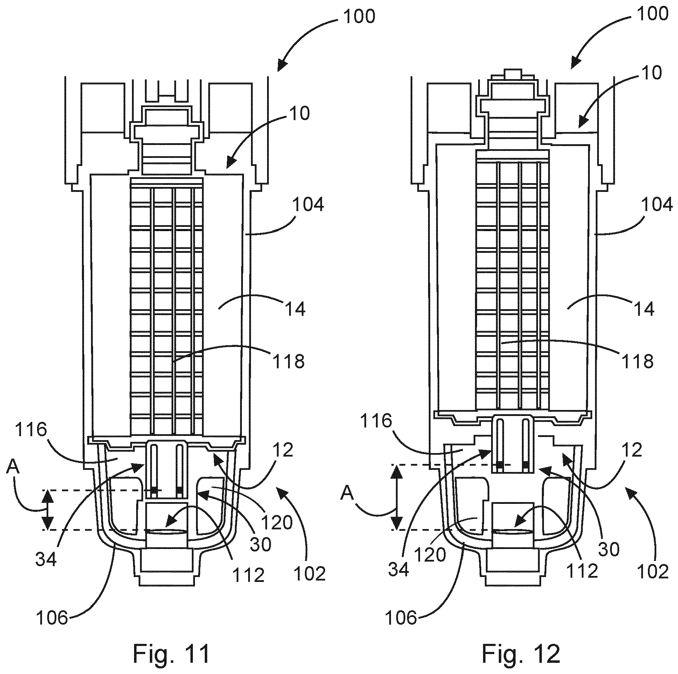

Bei dem in den Fig. 11 und 12 dargestellten Ausführungsbeispiel des Fluidfilters 100 bewegt sich der gesamte Filtereinsatz 10 in Axialrichtung bei einer Differenzdruckerhöhung zwischen der Rohseite 116 und der Reinseite 118 des Fluidfilters 100. Das filtereinsatzseitige Funkmodul 30 ist in einer Funkmodulhalterung 34 des Filtereinsatzes 10 angeordnet.

Bei dem in der Fig. 11 dargestellten Zustand ist der Abstand A zwischen dem filtereinsatzseitigen Funkmodul 30 und dem gehäuseseitigen Funkmodul 112 aufgrund des vergleichsweise geringen Differenzdrucks zwischen der Rohseite 116 und der Reinseite 118 des Fluidfilters 100 vergleichsweise klein.

Die Fig. 12 zeigt einen Zustand, in welchem das Filtermaterial 14 des Filtereinsatzes 10 stark verschmutzt ist, sodass zwischen der Rohseite 116 und der Reinseite 118 des Fluidfilters 100 ein vergleichsweise hoher Differenzdruck vorliegt. Der hohe Differenzdruck zwischen der Rohseite 116 und der Reinseite 118 des Fluidfilters 100 hat zu einer Axialauslenkung des Filtereinsatzes 10 geführt, wodurch auch der Abstand A zwischen dem filtereinsatzseitigen Funkmodul 30 und dem gehäuseseitigen Funkmodul 112 vergrößert wurde. Durch eine Signalauswertung der Funksignale, welche von dem filtereinsatzseitigen Funkmodul 30 an das gehäuseseitige Funkmodul 112 übermittelt wurden, kann der Abstand A zwischen den Funkmodulen 30, 112 und somit der Verschmutzungszustand des Filtermaterials 14 ermittelt werden. Die Signalauswertung wird durch eine elektronische Datenverarbeitungseinrichtung vorgenommen.

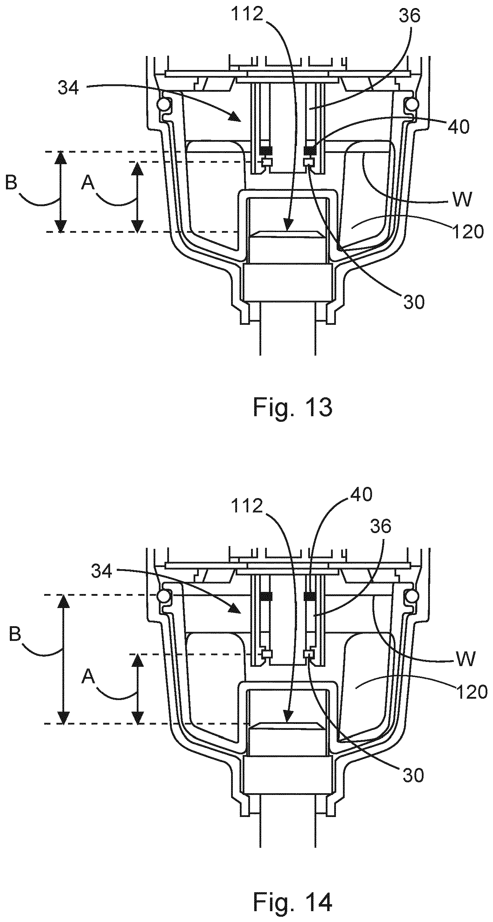

Bei dem in den Fig. 11 und 12 dargestellten Fluidfilter 100 handelt es sich um einen Kraftstofffilter, dessen Filtermaterial 14 während der Filtration Wasser aus dem Kraftstoff abscheidet. Das abgeschiedene Wasser sammelt sich in einem Wassersammelbereich 120. Die Fig. 13 und 14 zeigen eine Ausführungsform mit einem zusätzlichen schwimmfähigen Funkmodul 40, wobei zwei unterschiedliche Wasserstände W in dem Wassersammelbereich 120 dargestellt sind.

Die Funkmodulhalterung 34 weist eine als Schwimmkäfig ausgebildete Schwimmkammer 36 auf, in welcher das schwimmfähige Funkmodul 40 angeordnet ist. Der Schwimmkäfig 36 ragt in den Wassersammelbereich 120 des Fluidfilters 100 hinein, in welchem sich im Betrieb des Fluidfilters 100 aus dem zu filternden Fluid abgeschiedenes Wasser ansammelt. Das schwimmfähige Funkmodul 40 schwimmt auf dem sich in dem Wassersammelbereich 120 sammelnden Wasser, wobei der Schwimmkäfig 36 einen Auftriebsbereich für das schwimmfähige Funkmodul 40 aufweist, welcher ein Aufsteigen des schwimmfähigen Funkmoduls 40 bei steigendem Wasserstand W in dem Wassersammelbereich 120 des Fluidfilters 100 erlaubt. Das schwimmfähige Funkmodul 40 schwimmt im Betrieb des Fluidfilters in einer Grenzschicht zwischen dem zu filternden Fluid auf der Rohseite des Fluidfilters 100 und der sich in dem Wassersammelbereich 120 des Fluidfilters 100 befindenden Wassermenge. Bei steigendem Wasserstand W nimmt auch der Abstand B zwischen den Funkmodulen 40, 112 zu. Durch eine Signalauswertung der von dem schwimmfähigen Funkmodul 40 an das gehäuseseitige Funkmodul 112 übertragenen Funksignale kann der Abstand B ermittelt werden. Eine Datenverarbeitungseinrichtung kann aus dem Abstand B dann den Wasserstand in dem Wassersammelbereich 120 ermitteln. Über das Funkmodul 30 und dessen Abstand A zum gehäuseseitige Funkmodul 112 kann weiterhin der Verschmutzungszustand des Filtermaterials 14 ermittelt werden. Das Funkmodul 30 und das Funkmodul 40 sind Funkmodule unterschiedlichen Typs, welche unterschiedliche Modulationsarten verwenden, sodass deren Funksignale unterscheidbar sind. Ferner können die Funksignale der Funkmodule 30, 40 anhand einer gesendeten Kennung zugeordnet werden.

In einer anderen Ausführungsform kann für die Wasserstandserfassung und die Erfassung des Verschmutzungszustands des Filtermaterials 14 auch dasselbe Funkmodul genutzt werden. Durch eine Auswertung der Abstandsveränderung über die Zeit kann die die Auswertung vornehmende elektronische Datenverarbeitungseinrichtung in diesem Fall feststellen, ob die Abstandsänderung aufgrund einer Axialbewegung des gesamten Filtereinsatzes wegen eines Differenzdruckanstiegs zwischen der Rohseite 116 und der Reinseite 118 oder aufgrund einer Erhöhung des Wasserstandes W eingetreten ist. Über eine Auswertung der Funksignale kann in diesem Fall also zwischen einer verschmutzungsbedingten Abstandsänderung und einer auf eine Wasserstandsänderung zurückgehende Abstandsänderung unterschieden werden.

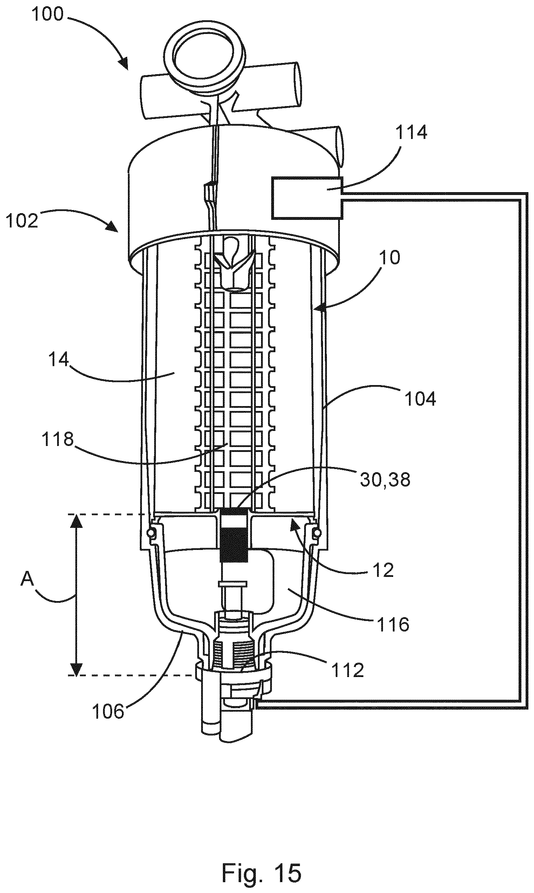

Die Fig. 15 zeigt einen als Kraftstofffilter ausgebildeten Fluidfilter 100, bei welchem das filtereinsatzseitige Funkmodul 30 eine Temperaturmesseinrichtung 38 aufweist und dazu eingerichtet ist, Temperaturmesswerte an das gehäuseseitige Funkmodul 112 zu übermitteln. Das filtereinsatzseitige Funkmodul 30 kann einen zusätzlichen Mikrocontroller und einen oder mehrere Temperatursensoren umfassen, welche die Temperaturmesseinrichtung 38 bilden. Die übermittelten Temperaturmesswerte können zum Steuern oder Regeln einer Heizeinrichtung 114 verwendet werden, wobei die Heizeinrichtung 114 zum Erwärmen des Kraftstoffs innerhalb des Filtergehäuses 102 eingesetzt wird. Bei einer zu niedrigen Kraftstofftemperatur kann die Heizeinrichtung 114 eingeschaltet werden. Der eine oder die mehreren Temperatursensoren der Temperaturmesseinrichtung 38 können Thermistoren, beispielsweise Heißleiter, sein. Über eine Datenverarbeitungseinrichtung kann bei dem in der Fig. 15 dargestellten Ausführungsbeispiel außerdem der Abstand A zwischen dem filtereinsatzseitigen Funkmodul 30 und dem gehäuseseitigen Funkmodul 112 und somit der Verschmutzungszustand des Filtermaterials 14 ermittelt werden.

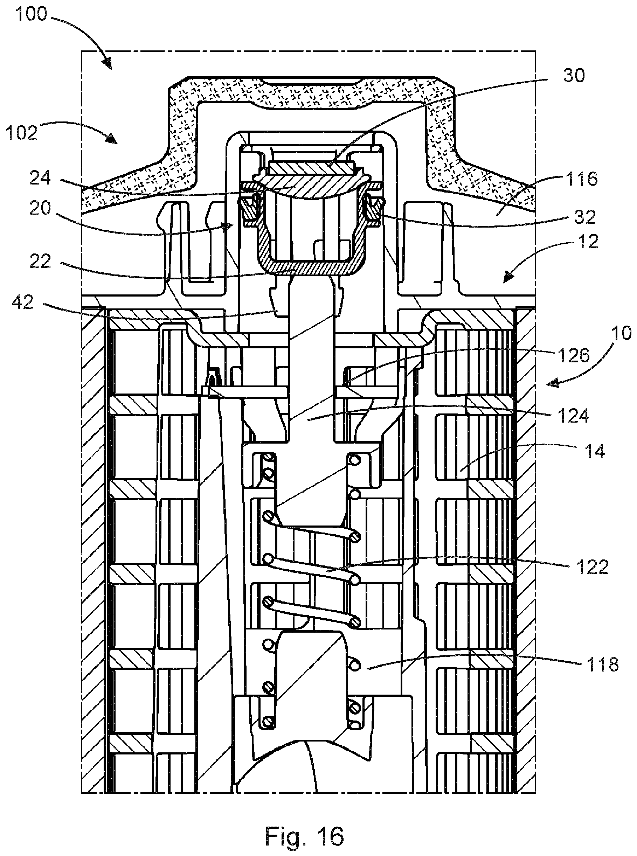

Die Fig. 16 bis 18 zeigen einen Fluidfilter 100 mit einem Umgehungsventil 20. Das Umgehungsventil 20 umfasst einen den Ventilsitz tragenden Kontaktkörper 24 und einen Verschlusskörper 22, an welchem eine radial abdichtende und umlaufende Dichtung 32 angeordnet ist. Der Verschlusskörper 22 ist das Teil des Umgehungsventils 20, welches die zu einer Öffnung des Umgehungsventils 20 führende Bewegung ausführt. Der den Ventilsitz tragende Kontaktkörper 24 ist das Teil des Umgehungsventils 20, welches während der Öffnung des Umgehungsventils 20 still steht bzw. keine Bewegung ausführt. An dem Kontaktkörper 24 ist ein filtereinsatzseitiges Funkmodul 30 angeordnet.

Eine Feder 122 wirkt über das Zwischenglied 124 auf den Verschlusskörper 22. Bei dem in der Fig. 16 dargestellten Zustand ist das Filtermaterial 14 nicht verschmutzt, sodass der Differenzdruck zwischen der Rohseite 116 und der Reinseite 118 des Fluidfilters 100 so gering ist, dass die Feder 122 den Verschlusskörper 22 samt Kontaktkörper 24 und Funkmodul 30 maximal nach oben drückt.

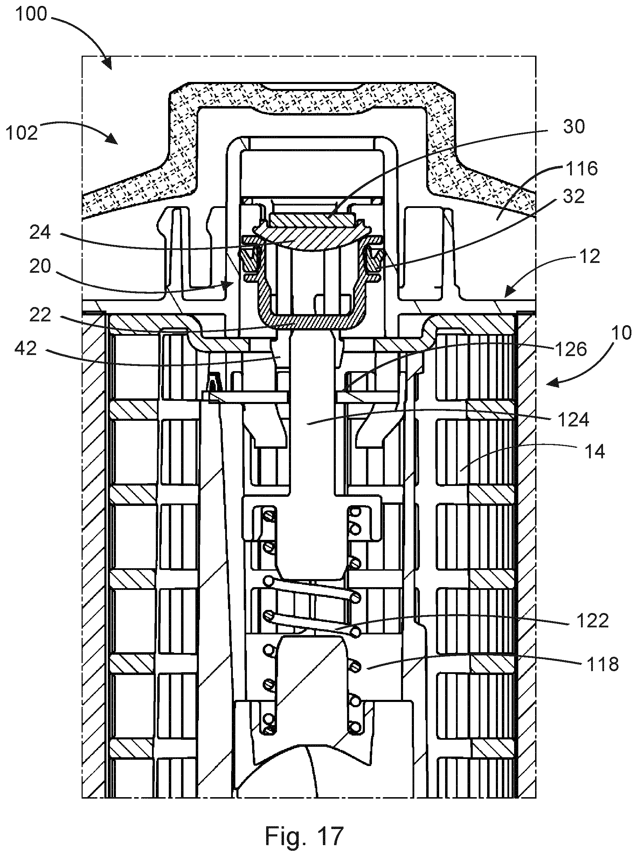

Die Fig. 17 zeigt einen Zustand, bei welchem das Filtermaterial 14 stärker verschmutzt ist, sodass der Differenzdruck zwischen der Rohseite 116 und der Reinseite 118 des Fluidfilters 100 dafür sorgt, dass der Verschlusskörper 22 samt Kontaktkörper 24 und Funkmodul 30 axial bewegt werden. Somit verändert sich bei einer Differenzdruckerhöhung zwischen der Rohseite 116 und der Reinseite 118 des Fluidfilters 100 der Abstand des filtereinsatzseitigen Funkmoduls 30 zu einem gehäuseseitigen Funkmodul (nicht dargestellt).

Bei einer weiteren Differenzdruckerhöhung zwischen der Rohseite 116 und der Reinseite 118 des Fluidfilters 100 schlägt der mit dem Kontaktkörper 24 verbundene Anschlagskörper 42 gegen die Anschlagsfläche 126, sodass eine weitere Axialbewegung des Kontaktkörpers 24 und des filtereinsatzseitigen Funkmoduls 30 verhindert wird. Dadurch, dass der Verschlusskörper 22 bei fortschreitender Verschmutzung des Filtermaterials 14 und einer damit einhergehenden Differenzdruckerhöhung zwischen der Rohseite 116 und der Reinseite 118 des Fluidfilters 100 eine weitere Axialbewegung ausführt, kommt es zur Öffnung des Umgehungsventils 20.

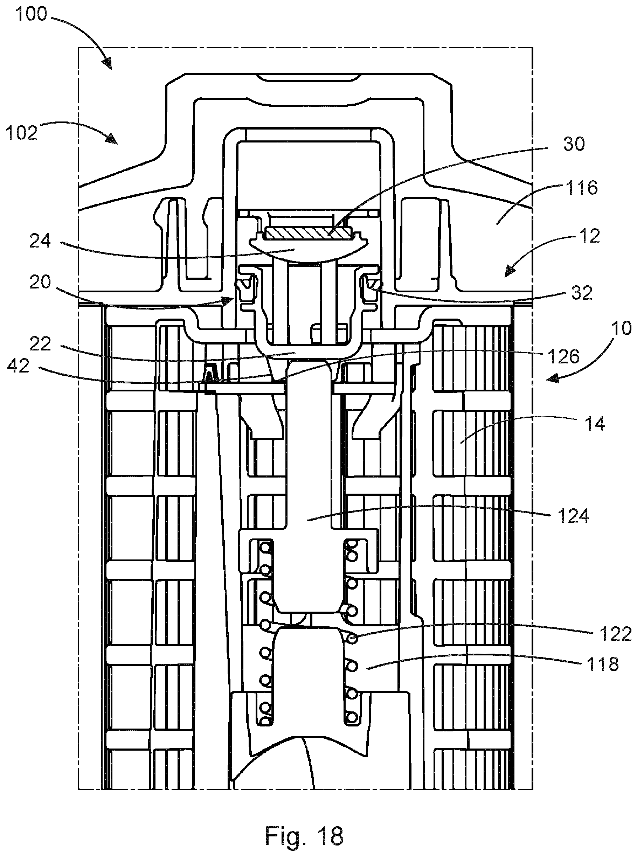

Das geöffnete Umgehungsventil 20 ist in der Fig. 18 dargestellt. Das die Verschmutzungserfassung erlaubende filtereinsatzseitige Funkmodul 30 ist folglich an dem Teil des Umgehungsventils 20 angeordnet, welches während der Öffnung des Umgehungsventils 20 still steht bzw. keine Bewegung ausführt.

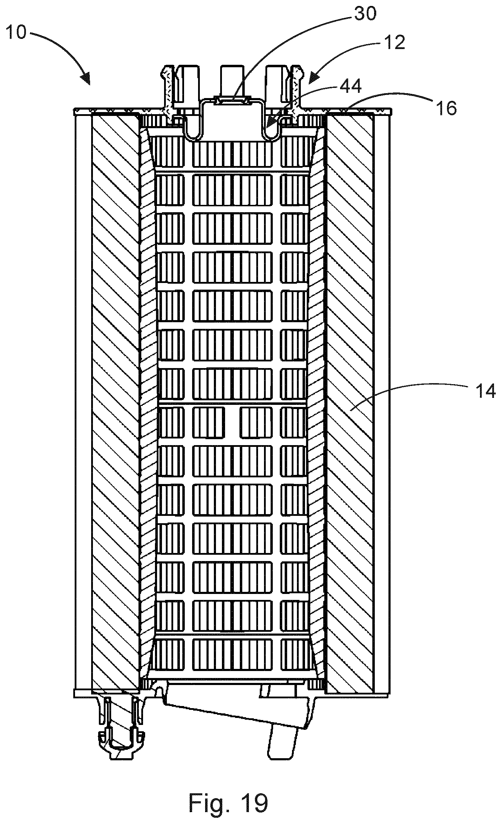

Bei dem in der Fig. 19 dargestellten Filtereinsatz 10 ist das filtereinsatzseitige Funkmodul 30 an einem Elastomerbalg 44 befestigt. Der Elastomerbalg 44 ist mit der Trägerstruktur 12 des Filtereinsatzes 10 verbunden. Der Filtereinsatz 10 kann beispielsweise mit dem in den Fig. 16 bis 18 dargestellten Filtergehäuse 102 verwendet werden, sodass das filtereinsatzseitige Funkmodul 30 bei einem steigenden Differenzdruck zwischen der Rohseite 116 und der Reinseite 118 des Fluidfilters 100 gegen das Zwischenglied 124 drückt. Somit wird der Elastomerbalg 44 bei einem steigenden Differenzdruck zwischen der Rohseite 116 und der Reinseite 118 des Fluidfilters 100 verformt, wobei es gleichzeitig zu einer Axialbewegung des filtereinsatzseitige Funkmoduls 30 kommt.

### Bezugszeichen

- 10: Filtereinsatz
- 12: Trägerstruktur
- 14: Filtermaterial
- 16: Endscheibe
- 20: Umgehungsventil
- 22: Verschlusskörper
- 24: Kontaktkörper
- 26: Ventilsitz
- 28: Feder
- 30, 30a-30c: Funkmodule
- 32: Dichtung
- 34: Funkmodulhalterung
- 36: Schwimmkammer
- 38: Temperaturmesseinrichtung
- 40: Funkmodul
- 42: Anschlagskörper
- 44: Elastomerbalg

- 100: Fluidfilter
- 102: Filtergehäuse
- 104: Gehäusebasiskörper
- 106: Gehäusedeckel
- 108: Gewinde
- 110: Stützdorn
- 112: Funkmodul
- 114: Heizeinrichtung
- 116: Rohseite
- 118: Reinseite
- 120: Wassersammelbereich
- 122: Feder
- 124: Zwischenglied
- 126: Anschlagsfläche

- A: Abstand
- B: Abstand
- W: Wasserstand

## Patentansprüche

1. Filtereinsatz (10) zum Einsetzen in ein Filtergehäuse (102) eines Fluidfilters (100), mit
- einem Filtermaterial (14), welches dazu eingerichtet ist, im Betrieb des Fluidfilters (100) von einer Rohseite (116) zu einer Reinseite (118) des Fluidfilters (100) von einem zu filternden Fluid durchströmt zu werden,
- einem filtereinsatzseitiges Funkmodul (30, 30a-30c), welches dazu eingerichtet ist, sich im Betrieb des Fluidfilters (100) in Abhängigkeit des von dem Verschmutzungszustand des Filtermaterials (14) abhängigen Druckunterschieds zwischen Rohseite (116) und Reinseite (118) des Fluidfilters (100) zu bewegen und zur Erfassung des Verschmutzungszustands des Filtermaterials (14) mit einem gehäuseseitigen Funkmodul (112) des Fluidfilters (100), dessen Abstand (A) zum filtereinsatzseitigen Funkmodul (30, 30a-30c) sich beim Bewegen des filtereinsatzseitigen Funkmoduls (30, 30a-30c) ändert, zu kommunizieren; und
- einem Umgehungsventil (20) oder zumindest einem Teil eines Umgehungsventils (20), wobei das filtereinsatzseitige Funkmodul (30, 30a-30c) an dem Umgehungsventil (20) oder dem filtereinsatzseitigen Teil des Umgehungsventils (20) angeordnet oder in das Umgehungsventil (20) oder das filtereinsatzseitige Teil des Umgehungsventils (20) integriert ist, wobei das Umgehungsventil (20) einen beweglichen Verschlusskörper (22) aufweist oder das filtereinsatzseitige Teil des Umgehungsventils (20) ein beweglicher Verschlusskörper (22) ist, welcher dazu eingerichtet ist, sich in Abhängigkeit des Druckunterschieds zwischen Rohseite (116) und Reinseite (118) des Fluidfilters (100) relativ zu einem einen Ventilsitz (26) tragenden Kontaktkörper (24) des Umgehungsventils (20) zu bewegen, wobei das filtereinsatzseitige Funkmodul (30, 30a-30c) an dem Verschlusskörper (22) des Umgehungsventils (20) angeordnet und/oder dazu eingerichtet ist, sich gemeinsam mit dem Verschlusskörper (22) des Umgehungsventils (20) zu bewegen, wobei der Verschlusskörper (22) dazu eingerichtet ist, eine Bypassleitung zwischen der Rohseite (116) und der Reinseite (118) zu sperren, bis der Druckunterschied zwischen Rohseite (116) und Reinseite (118) einen Differenzdruckgrenzwert erreicht und bei Erreichen des Differenzdruckgrenzwerts die Bypassleitung freizugeben, sodass zumindest ein Teil des zu filternden Fluids von der Rohseite (116) auf die Reinseite (118) gelangen kann, ohne das Filtermaterial (14) zu durchströmen;
**dadurch gekennzeichnet, dass** der Verschlusskörper (22) dazu eingerichtet ist, sich mit zunehmendem Differenzdruck unterhalb des Differenzdruckgrenzwerts zu bewegen, ohne dass es zur Freigabe der Bypassleitung kommt.

2. Filtereinsatz (10) nach Anspruch 1,
**dadurch gekennzeichnet, dass** das filtereinsatzseitige Funkmodul (30, 30a-30c) dazu eingerichtet ist, ein oder mehrere Funksignale auszusenden, mittels welchen der Abstand (A) des filtereinsatzseitigen Funkmoduls (30, 30a-30c) zu dem gehäuseseitigen Funkmodul (112) ermittelbar ist und/oder welche eine Identifikation des Filtereinsatzes (10) oder eine Typenerkennung des Filtereinsatzes (10) erlauben.

3. Filtereinsatz (10) nach Anspruch 1 oder 2,
**dadurch gekennzeichnet, dass** der Verschlusskörper (22) in einer Führungshülse angeordnet ist, welche dazu eingerichtet ist, den Verschlusskörper (22) während einer differenzdruckbedingten Bewegung zu führen.

4. Filtereinsatz (10) nach einem der vorstehenden Ansprüche,
**dadurch gekennzeichnet, dass** das filtereinsatzseitige Funkmodul (30, 30a-30c) und/oder das schwimmfähige Funkmodul (40) einen Transponder, insbesondere einen RFID-Transponder, umfasst oder ein Transponder insbesondere ein RFID-Transponder ist.

5. Fluidfilter (100) zum Filtern eines Fluides, mit
- einem Filtergehäuse (102) mit einem gehäuseseitigen Funkmodul (112), und
- einem Filtereinsatz (10) mit einem filtereinsatzseitigen Funkmodul (30, 30a-30c), wobei der Filtereinsatz (10) dazu eingerichtet ist, in das Filtergehäuse (102) eingesetzt zu werden;
wobei das filtereinsatzseitige Funkmodul (30, 30a-30c) und das gehäuseseitige Funkmodul (112) dazu eingerichtet sind, miteinander zu kommunizieren;
**dadurch gekennzeichnet, dass** der Filtereinsatz (10) nach einem der vorstehenden Ansprüche ausgebildet ist.

6. Fluidfilter (100) nach Anspruch 5,
**dadurch gekennzeichnet, dass** das gehäuseseitige Funkmodul (112) dazu eingerichtet ist, ein oder mehrere Funksignale von dem filtereinsatzseitigen Funkmodul (30, 30a-30c) zu empfangen, mittels welchen der Abstand (A) des filtereinsatzseitigen Funkmoduls (30, 30a-30c) zu dem gehäuseseitigen Funkmodul (112) ermittelbar ist.

7. Filtersystem, mit
- einem Fluidfilter, und
- einer elektronischen Datenverarbeitungseinrichtung,
**dadurch gekennzeichnet, dass** der Fluidfilter (100) nach einem der Ansprüche 5 oder 6 ausgebildet ist und die Datenverarbeitungseinrichtung dazu eingerichtet ist, ein oder mehrere von dem filtereinsatzseitigen Funkmodul (30, 30a-30c) an das gehäuseseitige Funkmodul (112) gesendete Signale und/oder deren Signaleigenschaften zum Ermitteln des Abstands (A) zwischen dem filtereinsatzseitigen Funkmodul (30, 30a-30c) und dem gehäuseseitigen Funkmodul (112) auszuwerten.

8. Filtersystem nach Anspruch 7,
**dadurch gekennzeichnet, dass** die elektronische Datenverarbeitungseinrichtung dazu eingerichtet ist, den Abstand (A) zwischen dem filtereinsatzseitigen Funkmodul (30, 30a-30c) und dem gehäuseseitigen Funkmodul (112) auf Grundlage der Signalstärke und/oder des Signalrauschens des einen oder der mehreren Signale zu ermitteln.

9. Filtersystem nach Anspruch 7 oder 8,
**dadurch gekennzeichnet, dass** die elektronische Datenverarbeitungseinrichtung dazu eingerichtet ist, auf Grundlage des Abstands (A) zwischen dem filtereinsatzseitigen Funkmodul (30, 30a-30c) und dem gehäuseseitigen Funkmodul (112) den Verschmutzungszustand des Filtermaterials (14) zu bestimmen.

## Claims

1. Filter insert (10) for insertion into a filter housing (102) of a fluid filter (100), comprising
- a filter material (14), which is configured to be flowed through by a fluid to be filtered from a raw side (116) to a clean side (118) of the fluid filter (100) during operation of the fluid filter (100),
- a filter-insert-side radio module (30, 30a-30c), which is configured to move, during operation of the fluid filter (100), in dependence on the pressure difference between the raw side (116) and the clean side (118) of the fluid filter (100), which pressure difference is dependent on the contamination level of the filter material (14), and to communicate with a housing-side radio module (112) of the fluid filter (100), whose distance (A) from the filter-insert-side radio module (30, 30a-30c) changes as the filter-insert-side radio module (30, 30a-30c) moves, for determination of the contamination level of the filter material (14); and
- a bypass valve (20) or at least a portion of a bypass valve (20), wherein the filter-insert-side radio module (30, 30a-30c) is arranged on the bypass valve (20) or the filter-insert-side portion of the bypass valve (20) or is integrated into the bypass valve (20) or the filter-insert-side portion of the bypass valve (20), wherein the bypass valve (20) has a movable closure body (22) or the filter-insert-side portion of the bypass valve (20) is a movable closure body (22) that is configured to move in dependence on the pressure difference between the raw side (116) and the clean side (118) of the fluid filter (100) relative to a contact body (24) of the bypass valve (20) that carries a valve seat (26), wherein the filter-insert-side radio module (30, 30a-30c) is arranged on the closure body (22) of the bypass valve (20) and/or is configured to move together with the closure body (22) of the bypass valve (20), wherein the closure body (22) is configured to block a bypass line between the raw side (116) and the clean side (118) until the pressure difference between the raw side (116) and the clean side (118) reaches a differential pressure threshold and, upon reaching the differential pressure threshold, to release the bypass line so that at least a portion of the fluid to be filtered can pass from the raw side (116) to the clean side (118) without flowing through the filter material (14);
**characterized in that** the closure body (22) is configured to move as the differential pressure increases below the differential pressure threshold without causing a release of the bypass line.

2. Filter insert (10) according to claim 1,
**characterized in that** the filter-insert-side radio module (30, 30a-30c) is configured to transmit one or more radio signals, by means of which the distance (A) of the filter-insert-side radio module (30, 30a-30c) to the housing-side radio module (112) can be determined and/or which allow for identification of the filter insert (10) or type recognition of the filter insert (10).

3. Filter insert (10) according to claim 1 or 2,
**characterized in that** the closure body (22) is arranged in a guide sleeve that is configured to guide the closure body (22) during movement caused by differential pressure.

4. Filter insert (10) according to any one of the preceding claims,
**characterized in that** the filter-insert-side radio module (30, 30a-30c) and/or the floatable radio module (40) comprises a transponder, in particular an RFID transponder, or is a transponder, in particular an RFID transponder.

5. Fluid filter (100) for filtering a fluid, comprising
- a filter housing (102) with a housing-side radio module (112), and
- a filter insert (10) with a filter-insert-side radio module (30, 30a-30c), wherein the filter insert (10) is configured to be inserted into the filter housing (102);
wherein the filter-insert-side radio module (30, 30a-30c) and the housing-side radio module (112) are configured to communicate with one another;
**characterized in that** the filter insert (10) is configured according to one of the preceding claims.

6. A fluid filter (100) according to claim 5,
**characterized in that** the housing-side radio module (112) is configured to receive one or more radio signals from the filter-insert-side radio module (30, 30a-30c), by means of which the distance (A) of the filter-insert-side radio module (30, 30a-30c) from the housing-side radio module (112) can be determined.

7. Filter system, comprising
- a fluid filter, and
- an electronic data processing device,
**characterized in that** the fluid filter (100) is configured according to one of claims 5 or 6, and the data processing device is configured to evaluate one or more signals sent from the filter-insert-side radio module (30, 30a-30c) to the housing-side radio module (112) and/or their signal characteristics for determining the distance (A) between the filter-insert-side radio module (30, 30a-30c) and the housing-side radio module (112).

8. A filter system according to claim 7,
**characterized in that** the electronic data processing device is configured to determine the distance (A) between the filter-insert-side radio module (30, 30a-30c) and the housing-side radio module (112) based on the signal strength and/or the signal-to-noise ratio of the one or more signals.

9. A filter system according to claim 7 or 8,
**characterized in that** the electronic data processing device is configured to determine the contamination level of the filter material (14) based on the distance (A) between the filter-insert-side radio module (30, 30a-30c) and the housing-side radio module (112).

## Revendications

1. Cartouche de filtrage (10) à insérer dans un carter de filtre (102) d'un filtre à fluide (100), dotée d'
- un matériau filtrant (14) qui est conçu pour être traversé par un fluide à filtrer pendant le fonctionnement du filtre à fluide (100), d'un côté brut (116) vers un côté propre (118) du filtre à fluide (100),
- un module radio (30, 30a - 30c) côté cartouche de filtrage, lequel module est conçu pour, en mode de fonctionnement de la cartouche de filtrage (100), se déplacer entre le côté brut (116) et le côté propre (118) du filtre à fluide (100) en fonction de la différence de pression qui dépend de l'état d'encrassement du matériau filtrant (14), et pour communiquer, afin de déterminer l'état d'encrassement du matériau filtrant (14), avec un module radio (112) côté carter du filtre à fluide (100) dont la distance (A) par rapport au module radio (30, 30a-30c) côté cartouche de filtrage varie lorsque le module radio (30, 30a-30c) côté cartouche de filtrage se déplace ; et
- une soupape de contournement (20) ou au moins une partie d'une soupape de contournement (20), le module radio (30, 30a-30c) côté cartouche de filtrage étant agencé sur la soupape de contournement (20) ou la partie côté cartouche de filtrage de la soupape de contournement (20), ou intégré dans la soupape de contournement (20) ou la partie côté cartouche de filtrage de la soupape de contournement (20), ladite soupape de contournement (20) présentant un corps obturateur mobile (22) ou la partie côté cartouche de filtrage de la soupape de contournement (20) étant un corps obturateur mobile (22) qui est conçu pour se déplacer en fonction de la différence de pression entre le côté brut (116) et le côté propre (118) du filtre à fluide (100) par rapport à un corps de contact (24) de la soupape de contournement (20) portant un siège de soupape (26), ledit module radio côté cartouche de filtrage (30, 30a-30c) étant agencé sur le corps obturateur (22) de la soupape de contournement (20) et/ou conçu pour se déplacer avec le corps obturateur (22) de la soupape de contournement (20), ledit corps obturateur (22) étant conçu pour obturer une conduite de dérivation entre le côté brut (116) et le côté propre (118) jusqu'à ce que la différence de pression entre le côté brut (116) et le côté propre (118) atteigne un seuil de pression différentielle, et à débloquer ladite conduite de dérivation lorsque ce seuil de pression différentielle est atteint, de sorte qu'au moins une partie du fluide à filtrer peut passer du côté brut (116) au côté pur (118) sans passer au travers du matériau filtrant (14) ;
**caractérisée en ce que** le corps obturateur (22) est conçu pour, lorsque la pression différentielle augmente, se déplacer en-dessous du seuil de pression différentielle sans que la conduite de dérivation ne soit débloquée.

2. Cartouche de filtrage (10) selon la revendication 1,
**caractérisée en ce que** le module radio côté cartouche de filtrage (30, 30a-30c) est conçu pour émettre un ou plusieurs signaux radio au moyen desquels la distance (A) du module radio côté cartouche de filtrage (30, 30a-30c) par rapport au module radio (112) côté carter peut être déterminée, et/ou qui permettent d'identifier la cartouche de filtrage (10) ou de reconnaître le type de la cartouche de filtrage (10).

3. Cartouche de filtrage (10) selon la revendication 1 ou 2,
**caractérisée en ce que** le corps obturateur (22) est agencé dans une gaine de conduite qui est conçue pour conduire le corps obturateur (22) lors d'un déplacement résultant d'une pression différentielle.

4. Cartouche de filtrage (10) selon l'une quelconque des revendications précédentes, **caractérisée en ce que** le module radio côté cartouche de filtrage (30, 30a-30c) et/ou le module radio flottant (40) comprend un transpondeur, notamment un transpondeur RFID, ou est un transpondeur, notamment un transpondeur RFID.

5. Filtre à fluide (100) pour filtrer un fluide, doté d'
- un carter de filtre (102) doté d'un module radio côté carter (112), et d'
- une cartouche de filtrage (10) dotée d'un module radio côté cartouche de filtrage (30, 30a-30c), la cartouche de filtrage (10) étant conçue pour être insérée dans le carter de filtre (102) ;
le module radio côté cartouche de filtrage (30, 30a-30c) et le module radio côté carter (112) étant conçus pour communiquer l'un avec l'autre ;
**caractérisé en ce que** la cartouche de filtrage (10) est réalisée selon l'une quelconque des revendications précédentes

6. Filtre à fluide (100) selon la revendication 5,
**caractérisé en ce que** le module radio côté carter (112) est conçu pour recevoir un ou plusieurs signaux radio du module radio côté cartouche de filtrage (30, 30a-30c) permettant de déterminer la distance (A) entre le module radio côté cartouche de filtrage (30, 30a-30c) et le module radio côté carter (112).

7. Système à filtre, doté d'
- un filtre à fluide, et
- d'un dispositif électronique de traitement des données,
**caractérisé en ce que** le filtre à fluide (100) est réalisé selon l'une quelconque des revendications 5 ou 6, et le dispositif de traitement des données est conçu pour analyser un ou plusieurs signaux envoyés par le module radio côté cartouche de filtrage (30, 30a-30c) au module radio côté carter (112) et/ou leurs caractéristiques de signaux pour calculer la distance (A) entre le module radio côté cartouche de filtrage (30, 30a-30c) et le module radio côté carter (112).

8. Système de filtre selon la revendication 7,
**caractérisé en ce que** le dispositif électronique de traitement des données est conçu pour calculer la distance (A) entre le module radio côté cartouche de filtrage (30, 30a-30c) et le module radio côté carter (112) sur la base de la puissance du signal et/ou du bruit de signal de l'un ou des plusieurs signaux.

9. Système de filtre selon la revendication 7 ou 8,
**caractérisé en ce que** le dispositif électronique de traitement des données est conçu pour déterminer l'état d'encrassement du matériau filtrant (14) à partir de la distance (A) entre le module radio côté cartouche de filtrage (30, 30a-30c) et le module radio côté carter (112).
